# EUROPEAN PATENT APPLICATION

(11) **EP 4 785 811 A1**
(43) Date of publication of application: **05.08.2026**
(21) Application number: 26156250.8
(22) Date of filing: 04.02.2026
(51) Int. Cl.: A23L 33/105, A23L 33/12, A23L 33/21, A23L 33/22, A23P 20/10

(54) **FIBER ENTRAPPED BIO-ACTIVES**

(30) Priority: 04.02.2025 IN 202411074985; 13.12.2025 IN 202511126293
(71) Applicant: Makams Biotech Private Limited, Uttar Pradesh 283151 (IN)
(72) Inventor: AGARWAL, Aakash, 122002 Gurgaon, Chakkarpur, Haryana (IN)
(74) Representative: Buzzi, Notaro & Antonielli d'Oulx S.p.A.

(57) **Abstract**

Provided herein is a combination of dietary fibres with optional naturally occurring binder as entrapment for bioactive(s) such that the bioactive(s) can be delivered in the form of controlled release powder/granule. The active may be water soluble or insoluble. The combination comprises a naturally dietary fibers in which the bioactive is entrapped. Present invention also provides a composition comprising combination of dietary fiber and optional naturally occurring binder entrapping water soluble/insoluble bioactives therein and process of preparing the same.

## Description

### FIELD OF THE INVENTION

The present invention relates to a combination comprising of dietary fiber with entrapped bio-actives wherein the dietary fiber comprises of soluble and insoluble fibers in the ratio ranging from 1:5 to 5:1. This combination significantly protect the bio-actives from gastric acid and from intestinal microsomal enzymes and allows slow release of the bio-active so as to extend their activities in unmetabolized form. The combination comprises naturally occurring dietary fibers with or without naturally occurring binder in which the bioactive (including water-soluble or water -insoluble) is entrapped. Also, a composition comprising of such a combination of dietary fiber with or without binder and bio-active wherein the bio-actives are entrapped in the dietary fibers; and other excipients is provided. A process of entrapping the bio-active in the dietary fibers and the process for preparing composition with the combination of dietary fiber with or without binder and bio-active and the excipient are also provided.

### BACKGROUND OF THE INVENTION

Dietary fiber, as the seventh nutrient in addition to protein, fat, sugar, vitamins, water, and inorganic salts, is a carbohydrate polymer containing ten or more monomer units that is not hydrolyzed by endogenous enzymes in the human. The main physicochemical properties of dietary fiber are strong water absorption and bulking capacities, viscosity and gelation, binding ability, and ferment ability, which is a good alternative to phosphate in food processing (https://doi.org/10.1016/j.1wt.2022.114274). It is often used as a thickener, expander, emulsifier, formula assistant, and filler in meat products, health food, dairy products, and infant food. The mechanism of polysaccharide improved gel properties is considered as packing and filling effect. Gums like carrageen and Konjac glucomannan, had a strong water-binding ability and can self-aggregate through hydrogen bonds, resulting in an improvement of meat gel properties as fillers. Moreover, the interaction between gums also could improve the filling effect described the phase behavior between polysaccharide as trapped and interpenetrated structure, which was used to explain the mechanism of the influence of insoluble dietary fiber, modified starch and konjac glucomannan on the properties of MP gel (https://www.sciencedirect.com/science/article/pii/S0023643822012099).

Citrus fiber (CF) as a high-quality dietary fiber is a natural functional food material extracted from the citrus pulp and composed of water-soluble and water-insoluble fibers with a total amount of 33% and other bio-active components such as flavonoids, polyphenols, and vitamin C. It is now beginning to be used in the food industry because of its good water retention, emulsification, gel properties, oil retention, and thickening (https://doi.org/10.1016/j.lwt.2022.114274).

Dietary fiber, the indigestible cell wall component of plant material, is considered to play an important role in human diet and health. However, there is evidence indicating that these complex carbohydrates directly interact with the food antioxidants and interfere with the adequate assimilation of these compounds. Most studies on antioxidant bioavailability are focused on foods and beverages from which antioxidants are easily released. Research concerning the bio-accessibility of phenolic compounds and other antioxidants from solid matrices are important, since only the compounds released from the food matrix and/or absorbed in the small intestine are potentially bioavailable and in a condition to exert their beneficial effects (J Food Sci. 2011 Jan; 76(1): R6-R15).

Bio-accessibility is defined as the amount of a food constituent that is present in the gut, as a consequence of the release of this constituent from the solid food matrix and that may be able to pass through the intestinal barrier. Only antioxidants released from the fruit and vegetable matrix by the action of digestive enzymes (small intestine) and bacterial microflora (large intestine) are bio-accessible in the gut and therefore potentially bioavailable.

There is ample evidence that the physical state of the food matrix plays a key role in the release, mass transfer, accessibility, and biochemical stability of many food components. Antioxidants are often located in natural cellular compartments or within assemblies produced during processing. In either case, they need to be released during digestion so that they can be absorbed in the gut. Furthermore, less is known about the interactions of antioxidants with other food components, such as dietary fiber. It is known that dietary fiber can reduce the bioavailability of macronutrients, especially fat, and some minerals and trace elements in the human diet. Because it was demonstrated in humans that pectin strongly decreased the bioavailability of β-carotene, dietary fiber is suspected to also affect the absorption of other carotenoids and probably that of α-tocopherol and polyphenols compounds(https://doi.org/10.1111/j.1750-3841.2007.00274.x).

In general, the 2 main effects of dietary fiber in the foregut are to prolong gastric emptying time and to retard absorption of nutrients. Both are dependent on the physicochemical form of the fiber, and in particular, on its influence on digesta viscosity.

Dietary fiber can act in the small intestine in 3 main physical forms: as soluble polymer chains in solution, as insoluble macromolecular assemblies, and as swollen, hydrated, sponge-like networks. The principal physiological effect of dietary fiber in the small intestine is to reduce the rate (and in some cases the extent) of release of nutrients or antioxidants. The dominant factors involved in the influence of dietary fiber on antioxidant digestion are (i) physical trapping of antioxidants within structured assemblies such as fruit tissue, and (ii) enhanced viscosity of gastric fluids restricting the peristaltic mixing process that promotes transport of enzymes to their substrates, bile salts to unmicellized fat, and soluble antioxidants to the gut wall. Secondary factors may include binding of bile salts (and perhaps enzymes) to specific fiber components and inhibition of diffusion across the unstirred layer (https://doi.org/10.1111%2Fj.1750-3841.2010.01957.x)

The rate of release of antioxidants from fibrous particles into the surrounding intestinal fluid is inversely proportional to particle size and is directly proportional to solute gradient. It is also affected by the following factors: the physical state of the solute (for example, whether it is present in solid form or is already dissolved in water trapped within the particle); the physical structure of the particle (for example, whether it is readily deformed, like a sponge, so that dissolved solids can be squeezed out by peristaltic contractions, or rigid, so that solutes must diffuse out); and the surface properties of the particle (for example, surface-tension effects). The concentration of antioxidants within the continuous aqueous phase is constantly depleted by enteric absorption and replenished, as outlined above, by the release of material from food particles. The progress of these sequential release processes is, of course, also influenced by transit time, that is, the duration of exposure to a particular absorptive surface or digestive environment (Adiotomre J, Eastwood MA, Edwards CA, Brydon WG. Dietary fiber: in vitro methods that anticipate nutrition and metabolic activity in humans. Am J Clin Nutr. 1990;52(1):128-34.)

Citrus fiber can be made from different citrus fruits such as orange, lemon or limes which are the most common raw materials.

Because of the high surface area and composition, this citrus fiber can be used at very low levels while providing high functional benefits such as water holding, emulsification and gelling.

Citrus fiber is an all-natural, functional food ingredient derived from citrus fruits. It is Gluten Free and allergen free and is widely used in food and nutraceuticals because it is rich in dietary fiber and has good water retention, thickening and emulsification properties. Citrus fiber is able to provide colloidal properties while being an excellent Clean-Label ingredient. It can absorb 50 times its own weight of water. After homogenization, a three-dimensional network structure of gel is formed to provide gel suspension. After homogenization, viscosity increases from 25cp to nearly 1100cp (https://doi.org/10.1016/j.jfoodeng.2013.10.021)

While dietary fibers have been used to increase bio accessibility of bio-actives through water retention capacity, there are no information available, to the best of knowledge of the present inventors, regarding its capability to protect the bio-actives from degradation due to stomach acid, intestinal microsomal enzymes and thereby enhance its bioavailability/efficacy. Currently, the methods used for enteric protection include coating with natural products such as gum arabic, guar gum, agar, carrageenan gum, karaya gum, gum ghatti, locust agar, algin, pectin, xanthan gum, locust bean gum, gum tragacanth, tamarind gum, heated agar; a pectin derivative; low-methoxyl pectin; high-methoxyl pectin; an alginate; a cellulose derivative; microcrystalline cellulose; methylcellulose; sodium carboxymethyl cellulose; carboxymethylcellulose; hydroxypropyl cellulose; hydroxypropyl methyl cellulose; sodium hydroxymethyl cellulose; carboxymethyl locust bean gum; gellan gum; carboxymethyl guar gum; oleic acid, lauric acid, linoleic acid, palmitoleic acid, caprylic acid, capric acid, myristic acid, palmitic acid, margaric acid, margaroleic acid, stearic acid, alpha-linoleic acid, arachidic acid, eicosanic acid, behenic acid, and erucic acid; (US patent 10499677)

Apart from natural coating agent, one can use synthetic and/or animal derived coating agents such as methacrylic acid-ethyl acrylate copolymer series, hydroxy propyl methyl cellulose phthalate series, cellulose acetate phthalate series, and polyvinyl acetate. One type of polymers for enteric delivery of drugs, such as phthalate (polyvinyl acetate phthalate) series and shellac, can be selected and used alone or in combination of two (WO2021071051A1)

While enteric coating with these natural and synthetic coating agents serve the purpose of providing protection against stomach acid, the process is lengthy and expensive. Moreover, coating agents have not been demonstrated to provide protection against intestinal microsomal enzymes. Majority of the coating agents require use of organic solvents that are harmful even in trace levels.

Thus there is a need to provide entrapment of bio-actives - water insoluble and water soluble, so as to protect the same from stomach acids and intestinal enzymes so as to be available in the gut at the appropriate point for absorption

### OBJECTS OF THE PRESENT INVENTION

An object of the present invention is to provide a combination of dietary fibres for entrapping bio-actives and release them slowly at point of absorption.

A further object of the present invention is to provide combination of dietary fibres of soluble and insoluble fibres wherein the soluble and insoluble dietary fibres are provided in particular ratio with and without binder such that the combination protects the entrapped bio-actives from gastric acid and intestinal enzyme before reaching their point of action and release them slowly at point of absorption.

Another object of the present invention is to provide a composition comprising combination of dietary fibres and the entrapped bio-active therein, and excipients.

### SUMMARY OF PRESENT INVENTION

According to an aspect of present invention there is provided a combination of dietary fibres for entrapment of bio-active, comprising: soluble and insoluble fibers in a ratio of 5:1 to 1:5, optional binder and entrapped bioactive therein.

According to another aspect there is provided a process for preparing the entrapment combination of dietary fiber with entrapped bio-active therein comprises:
i) providing the soluble and insoluble dietary fibers in a ratio of 5:1 to 1:5, mixing the same in a solvent selected from water or combination of water and organic solvent;
ii) leaving the same for 2-24 hours for gel formation, subsequently adding the bio-active material to the gel and mixing for 2-15 hours at 20-80°C;
iii) exposing the gel entrapped bio-active to drying, preferably vacuum drying and dried for 2-36 hours at 20-80°C;
iv) subjecting the dried gel product to milling to reduce the particle size to 10-2000 micron and passed through 20-200 mesh sieve.

According to another aspect of present invention there is provided an entrapment composition comprising combination of dietary fibres comprising: soluble and insoluble fibers in a ratio of 5:1 to 1:5; entrapped bio-active therein; and excipients.

According to another aspect there is provided a process of preparation of an entrapment composition comprising combination of dietary fibres comprising: soluble and insoluble fibers in a ratio of 5:1 to 1:5; entrapped bio-active therein; and excipients.

According to another aspect there is provided a process for preparing the entrapment composition of dietary fiber with entrapped bio-active therein comprises:
i) providing the soluble and insoluble dietary fibers in a ratio of 5:1 to 1:5, mixing the same in a solvent selected from water or combination of water and organic solvent;
ii) leaving the same for 2-24 hours for gel formation, subsequently adding the bio-active material to the gel and mixing for 2-15 hours at 20-80°C;
iii) exposing the gel entrapped bio-active to drying, preferably vacuum drying and dried for 2-36 hours at 20-80°C;
iv) subjecting the dried gel product to milling to reduce the particle size to 10-2000 micron and passed through 20-200 mesh sieve;
v) mixing with excipients such as suspending agent, thickening agent, emulsifying agent, plasticizer, binder, diluent, disintegrant, stabilizing agent, viscosity modifying agent, sweetening agent, and the like.

According to an aspect of present invention there is provided a combination of dietary Fibers for entrapment of water-soluble bio-active, said combination comprising: soluble and insoluble fibers in a ratio of 5:1 to 1:5 and binder and entrapped bio-active therein.

According to another embodiment there is provided a process for preparing a combination of dietary fibers with binder for entrapment of water-soluble bio-active entrapped therein, said combination comprising: soluble and insoluble fibers in a ratio of 5:1 to 1:5 and binder, said process comprising:
i) providing the soluble and insoluble dietary fibers in a ratio of 5:1 to 1:5, a binder in the range of 3% to 8% mixing the same in a solvent selected from water or combination of water and organic solvent;
ii) leaving the same for 2-24 hours for gel formation;
iii) subsequently adding the bio-active.

According to another aspect there is provided a process of preparation of an entrapment composition comprising combination of dietary Fibers comprising: soluble and insoluble fibers in a ratio of 5:1 to 1:5 and binder; entrapped bio-active therein, said process comprises:
i) providing the soluble and insoluble dietary fibers in a ratio of 5:1 to 1:5, a binder in the range of 3% to 8%, mixing the same in a solvent selected from water or combination of water and organic solvent.
ii) leaving the same for 2-24 hours for gel formation, subsequently the bio-active material is added to the gel and mixed for 2-15 hours at 20-80°C;
iii) the gel entrapped bio-active is then exposed to drying, preferably vacuum drying and dried for 2-36 hours at 20-80°C;
iv)the dried gel product is subjected to milling to reduce the particle size to 10-2000 micron and passed through 20-200 mesh sieve.

### DESCRIPTION OF ACCOMPANYING DRAWINGS

Figure 1: provided is the Pharmacokinetic (PK) Data of Citrus Entrap Curcuminoids 20% versus Curcuminoids 95%.
Figure 2: Comparison of Dissolution Profile of Citrus Entrapped Caffeine with Unentrapped Caffeine.
Figure 3: Dissolution Profile of Citrus entrapped Caffeine with different binders.
Figure 4: Comparison of Dissolution Profile of Caffeine in Citrus Fiber entrapped along with different concentrations of the binder stearic acid.
Figure 5: Comparison of Dissolution Profile of Citrus Entrapped Ascorbic Acid with Un-entrapped Ascorbic Acid.
Figure 6: Dissolution Profile of Citrus entrapped Ascorbic Acid with different binders.

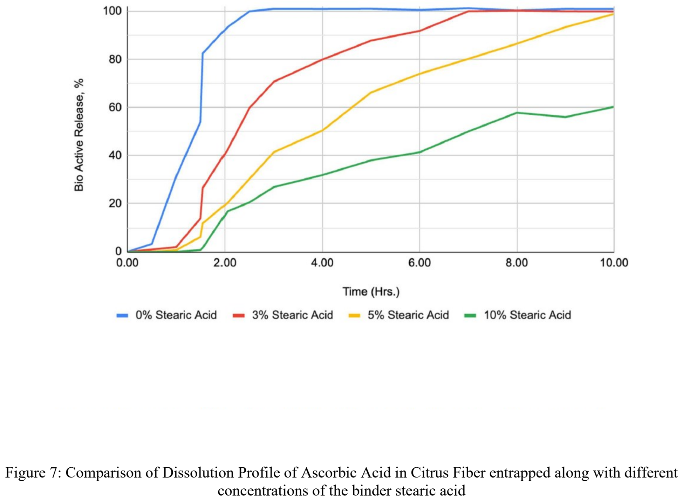

Figure 7: Comparison of Dissolution Profile of Ascorbic Acid in Citrus Fiber entrapped along with different concentrations of the binder stearic acid.

### DETAILED DESCRIPTION OF THE INVENTION

Surprisingly, the present inventors have found certain dietary fibers entrapped bio-actives, wherein the ratio of soluble to insoluble fiber plays a significant role in the entrapment process such that one can achieve significant protection against gastric acid as well as from intestinal microsomal enzymes.

The dietary fibers are non-toxic and are beneficial to health apart from protecting the bio-actives against stomach acid and from intestinal microsomal enzymes. Moreover, the entrapment process described herein is least expensive and can be completed in a short period as compared to the lengthy, expensive coating technology.

The following description with reference to the accompanying drawings is provided to assist in a comprehensive understanding of exemplary embodiments of the invention. It includes various specific details to assist in that understanding but these are to be regarded as merely exemplary.

Accordingly, those of ordinary skill in the art will recognize that various changes and modifications of the embodiments described herein can be made without departing from the scope of the invention. In addition, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the scope of the invention as defined by the appended claims and their equivalents.

It is to be understood that the singular forms "a," "an," and "the" include plural referents unless the context clearly dictates otherwise.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, steps or components but does not preclude the presence or addition of one or more other features, steps, components, or groups thereof.

The term dietary fiber has the usual meaning the indigestible part of plant-based foods that supports digestive health, helps control blood sugar and cholesterol, and aids in weight management. The dietary fibres may be soluble and insoluble fibres The term excipient as used herein have their usual meaning.

The terms binder and excipient as used herein have their usual meaning.

According to one aspect of the present invention there is provided a dietary fiber combination comprising dietary fiber and bio-actives entrapped therein, wherein the dietary fibers comprise soluble and insoluble fibers in a ratio of 5:1 to 1:5.

The said dietary fiber combination having dietary fiber and bio-actives entrapped therein wherein the dietary fibers comprise soluble and insoluble fibers in a ratio from 5:1 to 1:5 and the bio-actives are protected from degradation caused by stomach acid to a significant extent. Additionally, the bio-actives are also protected from the action of intestinal microsomal enzymes that metabolize the bio-actives extensively.

According to another aspect there is provided a process of entrapping bio-actives in dietary fibers wherein the dietary fibers comprise soluble and insoluble fibers in a ratio 5:1 to 1:5.

According to another aspect there is provided a composition comprising the combination comprising dietary fiber and bio-actives entrapped therein wherein the dietary fibers comprise soluble and insoluble fibers in a ratio 5:1 to 1:5; and excipients.

According to another aspect there is provided a process of entrapping bio-actives in dietary fiber so as to form dietary combination wherein the dietary fibers comprise soluble and insoluble fibers in a ratio 5:1 to 1:5.

According to another aspect there is provided a process for forming composition comprising the combination comprising dietary fiber and bio-actives entrapped therein wherein the dietary fibers comprise soluble and insoluble fibers in a ratio 5:1 to 1:5; and excipients.

According to one aspect of the present invention there is provided a dietary fiber combination comprising dietary fiber for entrapping Water-soluble bio-actives and binder, wherein the dietary fibers comprise soluble and insoluble fibers in a ratio of 5:1 to 1:5.

The combination is such that the bio-actives are protected from degradation caused by stomach acid to a significant extent. Additionally, the bio-actives are also protected from the action of intestinal microsomal enzymes that metabolize the bio-actives extensively.

According to another aspect there is provided a combination comprising the combination comprising dietary fiber and binder; Water-soluble bio-actives entrapped therein, wherein the dietary fibers comprise soluble and insoluble fibers in a ratio 5:1 to 1:5.

According to another aspect there is provided a process of entrapping Water-soluble bio-actives in combination of dietary fiber and binder; wherein the dietary fibers comprise soluble and insoluble fibers in a ratio 5:1 to 1:5.

According to another aspect there is provided a process for forming composition comprising the combination of dietary fiber and binder and Water-soluble bio-actives entrapped therein wherein the dietary fibers comprise soluble and insoluble fibers in a ratio 5:1 to 1:5.

The dietary fiber for the present invention is selected from citrus fibers, and others. The preferred fibers are citrus fibers. The citrus fibre is selected from orange, lemon or limes

The Water-soluble dietary fibers include oats, barley, legumes (beans, lentils), Psyllium husk, fenugreek, acacia gum, apples, citrus fruits such as orange, green tangerine, bergamot, lemon or limes, carrots, and broccoli.

The preferred dietary fiber for the present invention is selected from citrus fibers like orange, green tangerine, bergamot, lemon, limes, and others, which have both Water-soluble and insoluble Fibers.

In the combination the water soluble and insoluble bio-active and dietary fiber, are present in any ratio.

The combination of the dietary fiber with and without binder and the bio active entrapped therein as described herein enhances the bioavailability and the efficacy of the bio-actives significantly. The present combination can be used to enhance efficacy, reduce the dose of the bio-active and reduce frequency of dose administration.

In particular, the combination described herein serves as a tool for enteric protection as well as protection from intestinal microsomal enzymes of not only nutraceutical ingredients but also nutrients as well as drug molecules that are sensitive to stomach acid.

The combination of Citrus fiber/ other fiber entrapping the bio actives provide a safe, 100% natural, clean label and economic means for the enteric protection of bio-actives. In addition, the fiber entrapment provides protection against intestinal microsomal enzymes.

Such combination allows slow release of the bio-active so as to extend their activities.

The bio-active includes natural extracts, nutraceuticals, nutrients, pharmaceutical actives, natural active pharmaceutical ingredient, drug, vaccine, antibodies, enzymes, prebiotic and probiotics

The natural extracts are selected from Ashwagandha *(Withania somnifera)* extract, Gymnema extract, Berberine, Shatavari *(Asparagus racemosus)* extract, Marigold extract, Capsaicin, caffeine, ascorbic acid, curcuminoids like curcumin.

Preferably bio-active is curcuminoids like curcumin (water insoluble bio-active). Preferably, bio-active is caffeine (water-soluble).

Preferably, bioactive is ascorbic acid (water-soluble).

The dietary fibers in the combination of the present invention is critical.

Gum Acacia and Fenugreek are found to provide protection, but to a much lesser extent as compared to Citrus fiber due to the fact that they contain >90% of soluble fiber and negligible amount of insoluble fiber.

It is found that the dietary fibers with ratio of soluble and insoluble ranging from 5:1 to 1:5, from citrus provide the desired result of appropriate entrapment of the bio-active so that it provides at least 95% protection against gastric acid. In addition, the fibers provide protection against intestinal microsomal enzymes.

According to one embodiment the preferred binder for the present invention is selected from the group of stearic acid, palmitic acid and myristic acid

In yet another embodiment, the binder is present in concentration ranging between 3% to 8%.

The composition may be in the form of gel comprising the combination of dietary fiber and entrapped bio-actives therein in polar and nonpolar solvents and mixture thereof.

In one of the preferred embodiments, the solvent/solvents used for the entire process is/are water, any organic solvent and mixture of thereof.

The organic solvent is selected from ethanol, isopropyl alcohol, acetone, methanol. In yet another embodiment, the duration of gelling can go till 1 week at any temperature.

In yet another embodiment, the pH used here varies from 0 to 14.

The composition comprising the combination of dietary fibers with and without binder and the bio-actives entrapped therein may be provided in various solid forms like as granules, powder etc. For the purpose the composition may be mixed with pharmaceutically acceptable excipients.

The excipients in the said composition is selected from suspending agent, thickening agent, emulsifying agent, plasticizer, binder, diluent, disintegrant, stabilizing agent, viscosity modifying agent, sweetening agent, and the like.

The suspending agent is selected from gum acacia, gum tragacanth, sodium carboxymethyl cellulose, thickening agent is selected from xanthan gum, glycerin, sugar syrup; emulsifying agent is selected from polysorbates, span 60, span 20, sodium lauryl sulfate; plasticizer is selected from triacetin polyethylene glycol, glycerol, sorbitol; diluent is selected from Dicalcium phosphate, Microcrystalline cellulose, Lactose; disintegrant is selected from starch, sodium starch glycolate, crospovidone; stabilizing agent is selected from carboxymethyl cellulose pectin gelatin; viscosity modifying agent is selected from guar gum, hydroxyethyl cellulose, polyvinyl alcohol; sweetening agent is selected from sucralose, saccharine sodium, Monk fruit extract, stevia, and the like.

The process for preparing the combination of dietary fiber for entrapment of the bio-active, comprising:
i) providing the soluble and insoluble dietary fibers in a ratio of 5:1 to 1:5, mixing the same in a solvent selected from water or combination of water and organic solvent.
ii) leaving the same for 2-24 hours for gel formation, subsequently adding the bio-active material to the gel and mixing for 2-15 hours at 20-80°C;
iii) exposing the gel entrapped bio-active to drying, preferably vacuum drying and dried for 2-36 hours at 20-80°C;
iv) subjecting the dried gel product to milling to reduce the particle size to 10-2000 micron and passed through 20-200 mesh sieve.

The process for preparing the entrapment composition, with the combination of dietary fiber for entrapment of the bio-active, comprises:
a) providing the soluble and insoluble dietary fibers in a ratio of 5:1 to 1:5, mixing the same in a solvent selected from water or combination of water and organic solvent;
b) leaving the same for 2-24 hours for gel formation, subsequently adding the bio-active material to the gel and mixing for 2-15 hours at 20-80°C;
c) exposing the gel entrapped bio-active to drying, preferably vacuum drying and dried for 2-36 hours at 20-80°C;
d) subjecting the dried gel product to milling to reduce the particle size to 10-2000 micron and passed through 20-200 mesh sieve;
e) mixing with excipient such as suspending agent, thickening agent, emulsifying agent, plasticizer, binder, diluent, disintegrant, stabilizing agent, viscosity modifying agent, sweetening agent, and the like.

The process for preparing the combination of dietary fiber and binder for entrapment of water soluble bio-active, comprises:
i) providing the soluble and insoluble dietary fibers in a ratio of 5:1 to 1:5, a binder in the range of 3% to 8% mixing the same in a solvent selected from water or combination of water and organic solvent;
ii) leaving the same for 2-24 hours for gel formation.

The process for preparing the entrapment composition, comprising combination of dietary fiber and binder with entrapment of the water soluble bio-active therein, comprises:
i) providing the soluble and insoluble dietary fibers in a ratio of 5:1 to 1:5, a binder in the range of 3% to 8%, mixing the same in a solvent selected from water or combination of water and organic solvent.
ii) leaving the same for 2-24 hours for gel formation, subsequently the bio-active material is added to the gel and mixed for 2-15 hours at 20-80°C;
iii) the gel entrapped bio-active is then exposed to drying, preferably vacuum drying and dried for 2-36 hours at 20-80°C;
iv)the dried gel product is subjected to milling to reduce the particle size to 10-2000 micron and passed through 20-200 mesh sieve.

The present invention is now described with reference to following non-limiting illustrative examples. The tables are numbered separately in each of Example 2 and Example 3.

### Example 1: PREPARATION OF CITRUS ENTRAP CURCUMINOIDS

Process for the preparation of Fiber Entrapped Curcuminoids composition:
i) To 100ml of water 10g of Citrus Fiber (with soluble to insoluble ratio of 1:5) is added during 6 hrs;
ii) after mixing, it is allowed to stand for 6 hours for gel formation;
iii) Subsequently, 2.2 gm of 95% Curcuminoids turmeric extract is added to the gel and mix for 12 hours;
iv) Gel entrapped curcuminoid is vacuum dried for 48 hours at 60°C;
v) Dried gel product is subjected to milling to pass through 60 mesh sieve.
vi) Mixed with Microcrystalline cellulose (diluent) to adjust the concentration of curcuminoids to 20%.

The citrus entrapped curcuminoid as prepared in Example 1 is used for further test.

### Example 2. Evaluation of Bioavailability in Wistar rats.

Two products tested with in-vivo bioavailability test are:
1. Control: Curcuminoids 95% by HPLC ("Product A")
2. Working: Citrus Entrap Curcuminoids 20% by HPLC ("Product B").

Curcuminoids like curcumin is chosen as active since it is known to be acid sensitive as well as sensitive to the intestinal microsomal enzymes.

Animals: Wistar rats (175-300 gm body weight) obtained from the central animal house facility, Panjab University, Chandigarh. The approval number is PU/45/99/CPCSEA/IAEC/2023/834.

Animals were placed in cages in groups of 4 rats/cage and had access to animal feed and water ad libitum. All conditions were maintained according to CPCSEA guidelines.

### A. Preparation of Sample for Oral Administration:

Accurate weighing of the required amount of Curcuminoids 95% by HPLC ("Product A") and Citrus Entrapped Curcuminoids 20% by HPLC ("Product B").

Product A was added to a specific volume of water containing 1% carboxymethyl cellulose (CMC), which served as a suspending agent. Product B was added to citrate buffer (pH 4), instead of water, because it contains fibers that significantly increase formulation's viscosity that affect its oral administration. Thereafter, both formulations were placed on a magnetic stirrer for 30 minutes to facilitate thorough mixing and uniform dispersion to achieve homogeneous consistency of curcuminoids.

**Table 1: Detail about formulation and preparation of suspension (24 animals taken in a group)**

| **Formulation** | **Concentration of Curcuminoids** | **Dose (mg/kg)** | **Preparation of suspension** |
|---|---|---|---|
| Curcuminoids by HPLC | 95% | 1000 | 250 mg/mL 1% CMC |
| Citrus Entrap Curcuminoids by HPLC | 20% | 1000 | 62.5 mg/ml of citrate buffer (pH 4) |

### B. Blood Sample Withdrawal and its Preparation:

After the formulation preparation, in-vivo pharmacokinetic studies were performed by using Wistar rat (n = 6) and specific doses of both products were administered orally (based on animal body weight) at a dose of 1000mg/kg body weight.

After dose administration, blood samples of rats were withdrawn via retro-orbital plexus into EDTA coated tubes at intervals of 0 hours (h), 1 h, 2 h, 4 h, 8 h and 12 h. These collected blood samples were centrifuged at 10,000 rpm for 10 min and the plasma (0.25 mL) collected into dry Eppendorf tubes. To each tube, 0.75 mL mixture of acetonitrile and methanol (1:1 v/v) was added for protein precipitation under stirring and thereafter was centrifuged at 10,000 rpm for 10 minutes. The supernatant organic layer (0.6 mL) was taken into dry UPLC vials. Subsequently, 10 µL was injected into the column for UPLC analysis. Plasma concentrations of curcuminoids in both products were determined using the UPLC. From the data of plasma concentration versus time, various pharmacokinetic parameters such as peak concentration (C max), time at which peak occurred (T max), area under the curve (AUC), biological half-life (T 1/2), and bioavailability were calculated in each case as per known standard methods.

### C. Findings:

The pharmacokinetic profiles and bioavailability of Product B relative to Product A was evaluated at administration dose of 1000 mg/kg. Product B showed significantly higher Cₘₐₓ (0.95 ± 0.10 µg/mL) and AUC₀₋ₜ (8.84 ± 1.67 µg/mL×h) values, indicating a 57.52 fold increase in bioavailability.

Product B consists of curcuminoids entrapped in citrus soluble and insoluble fibers. Soluble fibers enhance curcumin bioavailability by forming a gel-like matrix that improves solubility, slowing gastric emptying, and increasing viscosity to extend residence time of curcumin in the gut. They also aid in micelle formation, facilitating better absorption. Insoluble fibers on the other hand improve bioavailability by promoting better gastrointestinal motility and stabilizing curcumin to prevent its degradation. Further, both the soluble and insoluble fibers promote gut flora which show significant glucuronidase activity thus facilitating free curcumin concentration in plasma.

**Table 2: Pharmacokinetic parameters of Citrus Entrapped Curcuminoids 20% versus Curcuminoids 95%.**

| **Formulations** | **Dose (mg/kg)** | **Active Dose (mg/kg)** | **Cmax (µg/mL)** | **Tmax (h)** | **T 1/2 (h)** | **AUC0-t (µg/ml*h)** | **AUC0-t (pg/ml*k) (Actives Dose = 200 mg/kg Curcuminoids)** | **AUC0-∞ (µg/ml*h)** | **MRT0-∞ (h)** | **Bioavaillbilty (Dose = 200 mg/kg Curcuminoids)** |
|---|---|---|---|---|---|---|---|---|---|---|
| **Corcuminoids 95%** | 1000 | 950 | 0.21 ± 0.05 | 2.00 ± 0.00 | 5.14 ± 1.06 | 0.73 ± 0.11 | 0.16 | 0.87 ± 0.17 | 7.03 | 1.00 |
| **Citrous Entrap Curcuminoids 20%** | 1000 | 200 | 0.95 ± 0.10 | 4.00 ± 2.02 | 5.54 ± 2.19 | 8.84 ± 1.67 | 8.84 | 11.61 ± 11.88 | 8.98 | 57.52 |

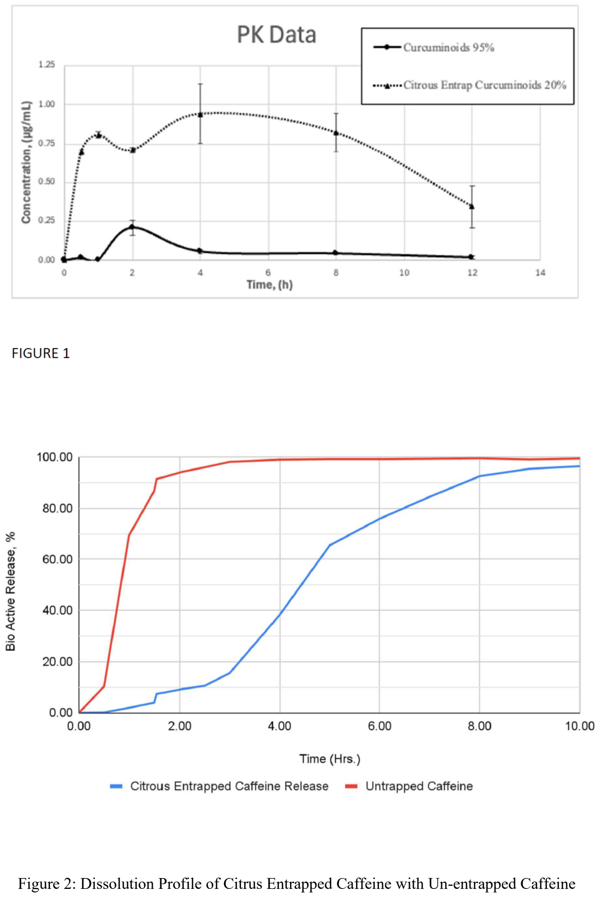

The Pharmacokinetic Data of Citrus Entrapped Curcuminoids 20% versus Curcuminoids 95% is provided in Figure 1

### D. Conclusion:

Due to entrapment in the Citrus fiber, which comprises of both soluble and insoluble fiber, curcuminoids were absorbed into the blood plasma in significantly large quantities. Citrus entrapped curcuminoids produced > 57 times higher bioavailability as compared to Unentrapped curcumin. Moreover, most of the curcumin absorbed remained unmetabolized, whereby it is the Free form of curcumin, which is significantly more potent than curcumin metabolites such as glucuronides and sulfates. During this animal study, only unmetabolized or free form of Curcuminoids was measured in the blood plasma. Glucuronidase and Sulfatase enzymes were not used.

Two main reasons for high bioavailability being i) citrus entrapment prevented the degradation curcumin in stomach due to stomach acid, ii) prevention of metabolism of curcuminoids in the gut by intestinal microsomal enzymes due to entrapment in citrus fibers.

### Example 3: Evaluation of efficacy of Fiber Entrapped Curcuminoids in humans

### RANDOMIZED DOUBLE BLINDED COMPARATIVE CLINICAL STUDY TO EVALUATE THE EFFICACY AND SAFETY OF FIBER ENTRAPPED CURCUMINOIDS (FIBER ENTRAPPED) IN OSTEOARTHRITIS AND SUBJECTS WITH LOW BACK

A randomized double blinded comparative clinical study to evaluate the efficacy and safety of FIBER ENTRAPPED 20% CURCUMINOIDS (FIBER ENTRAPPED) in osteoarthritis and Subjects with low back ache.

75 subjects with moderate to severe osteoarthritis and low back ache were randomly enrolled into three groups in a three-arm, parallel-group, randomized, double-blinded, active-comparator and placebo-controlled clinical study. The study evaluated the efficacy and safety of Curcumin 20% (FIBER ENTRAPPED form) in reducing osteoarthritis and low back ache. Block randomization was employed to ensure balanced participant allocation, and double-blinding was implemented to minimize bias by keeping both participants and investigators unaware of group assignments. The inclusion of a placebo arm and a comparator product, enabled assessment of the test product's efficacy, while the design as a whole allowed for a robust and comprehensive evaluation of its therapeutic benefits and safety, thereby contributing to the clinical understanding of Curcumin as a natural approach to physical health.

**Group 1 (n=25):** Curcumin 20% (FIBER ENTRAPPED form)- 1 capsule twice daily after food for 8 weeks. Each Capsule contains 200mg of 20% Curcuminoids, that is equal to 40mg curcuminoids. Total weight of each capsule was adjusted to 600mg with the help of Microcrystalline cellulose

**Group 2 (n=25):** Placebo - 1 capsule twice daily after food for 8 weeks. Each Capsule contains 250mg of Microcrystalline cellulose. Capsule weight was adjusted to 600mg with additional quantities of Microcrystalline cellulose. were further mixed with additional amounts of Microcrystalline cellulose.

**Group 3 (n=25):** Comparator Curcumin 95% - 2 capsules twice daily after food for 8 weeks. Each capsule contains 500mg of 95% Curcuminoids. Capsules weight was adjusted to 600mg with the addition of Microcrystalline cellulose.

Participants were randomized into 3 groups with 25 participants satisfying the inclusion and exclusion criteria. The study products were self-administered, for a period of 8 weeks by the participants as per instructions. Demographic data including gender, age (years), body weight (kg) and height (cm) in terms of BMI (kg/m2) and medical histories of participants were recorded. Each participant underwent thorough general and systemic examination. ESR (Erythrocyte Sedimentation Rate), CRP (C-reactive protein), CBC (Complete blood count), RFT (Renal function Test), LFT (Liver Function Test), HbA1c and RBS (Random Blood Sugar), were done.

### Inclusion Criteria

The participants who fulfilled the below listed criteria were enrolled in the study:
1. Age 30 years to 80 years
2. Have osteoarthritis (OA) of the knee joint based on American College of Rheumatology (ACR) criteria (Class III) and confirmed with X-rays and grade 3 or 4 as per Kellgren and Lawrence classification system and Subjects suffering from low back ache over the past 3 months.
3. Have been on stable dose of prescription Nonsteroidal Anti- Inflammatory Drugs (NSAIDS), or acetaminophen of atleast 2000 mg per day for atleast 20 days in the past month.
4. Pain defined by a level of greater than or equal to 30 mm on a 100 mm Visual Analogue Scale (VAS)
5. Patient who had not participated in any other clinical trial during the past 3 months.
6. Subjects, who were willing to give written, signed and dated informed consent to participate in the study.

### Exclusion Criteria

Participants with the below listed criteria were excluded from the study:
1. Arthritis of the knee from other causes and Lumbar spondylosis.
2. Uncontrolled hypertension (180/100) or Diabetes (HbAlc > 10)
3. Have OA pain that requires treatment with potent opioids, systemic corticosteroids, intra-articular injections, duloxetine, or venlafaxine
4. Moderate to severe renal impairment
5. Pregnant or lactating
6. Received any other investigational medicine within 7 days prior to screening which can interfere with investigational product activity
7. Suffering from any illness which would interfere with present study as decided by clinical investigator
8. History of hypersensitivity to any of the test products.
9. Any condition decided as unfit for study by Clinical investigator.
   - **Study Restrictions:** Use of any other supplements for osteoarthritis was restricted during the study period.
   - If concomitant medication like NSAID's was required during the study period, all such concomitant drug administrations were documented in relevant forms.

All the study participants who satisfied the study criteria were included in the study.

The study protocol, CRFs, regulatory clearance documents, product related information and informed consent form (in English & Tamil) were submitted to the Human Ethics Committee for approval. Ethics committee approval and CTRI registrations obtained before initiating the trial from the sites. Only after obtaining a proper Informed consent from the study participants, the study was commenced according to the study protocol.

### Evaluation Criteria

The primary outcome measures were
- Change from baseline to 8 weeks in knee and back pain intensity measured by Pain VAS Scale (0-100 mm)
- Change from baseline to 8 weeks in the Western Ontario and McMaster Universities osteoarthritis Index (WOMAC) Pain Subscale.
- Changes from base line to 8 weeks in following laboratory parameter(s):

### C Reactive Protein & ESR

- Change in Baseline to 8 Weeks in Patient's Global Assessment of Osteoarthritis and low back ache.
- Number of Subjects with a response rate measured by the Outcome Measures for Rheumatology Committee and Osteoarthritis Research Society International Standing Committee for Clinical Trials Response Criteria Initiative (OMERACT-OARSI).
- Changes from base line to 8 weeks in Quality of life- Questionnaires (Short Form Health-12).

### Results:

### 1. Pain Assessment using VAS scale

**Table 1. Evaluation of pain with the help of VAS score.**

| **Study visits** | **Statistics** | **FIBER ENTRAPPED** | **Comparator** | **Placebo** | **p-value among groups** |
|---|---|---|---|---|---|
| **Baseline** | **Mean±SD** | 57.2 ± **10.61** | 63.2 ± 12.49 | 62 ± **11.55** | 0.34 |
| | **Median (min-max)** | 60 (40-80) | 60 (50-90) | 60 (40-90) | |
| **Week 4** | **Mean±SD** | 51.6 ± 11.43 | 55.6 ± 16.09 | 61.4 ± 12.03 | 0.02 |
| | **Median (min-max)** | 50 (30-80) | 50 (40-90) | 60 (40-90) | |
| **Post study (Week 8)** | **Mean±SD** | 40 ± 15 | 46.8 ± 20.96 | 58.4 ± 13.52 | <0.0001 |
| | **Median (min-max)** | 40 (20-90) | 40 (20-90) | 55 (35-90) | |
| **p-value (Baseline and Post study) within group** | | **<0.0001** | **<0.0001** | **0.03** | - |

| | | | | | |
|---|---|---|---|---|---|
| *These groups showed a statistically significant reduction in pain compared to the placebo group | | | | | |

### Scores:

### Statistics tool used:

For comparisons among groups, the non-parametric ANOVA (Kruskal-Wallis test) followed by Dunn's multiple comparisons test was used, and within-group comparisons across all time points (Baseline to post-study) were performed using the Friedman test with Dunn's multiple comparisons test.

### Interpretation:

Visual Analog Scale (VAS) scores demonstrated a statistically significant reduction in within-group analysis from week 4 onwards in the Comparator group (500 mg, two capsules twice daily; p = 0.03), with the effect sustained throughout the study period.

**In** contrast, the FIBER ENTRAPPED group (200 mg, one capsule twice daily; p < 0.0001) and the Placebo group (p = 0.03)_showed significant reductions only at week 8. The placebo group's significance is likely attributable to concomitant medication use.

Between-group analysis indicated that the FIBER ENTRAPPED group (p = 0.04) showed a statistically significant reduction in pain from week 4 onwards compared to placebo, with the effect sustained throughout the study period. Importantly, despite the Comparator being administered at a higher dose (500 mg, two capsules twice daily), its efficacy was comparable to that of the FIBER ENTRAPPED group.

### 1. Change from baseline to 8 weeks in the Western Ontario and McMaster Universities Osteoarthritis Index (WOMAC) pain subscale.

**Table 2: WOMAC pain Subscale**

| **Parameters** | **Visits** | **FIBER ENTRAPPED** | | **Comparator** | | **Placebo** | | **p Value among the groups** |
|---|---|---|---|---|---|---|---|---|
| | | **Mean ± SD** | **Median (min-max)** | **Mean ± SD** | **Median (min-max)** | **Mean ± SD** | **Median (min-max)** | |
| 1.Pain during walking on a flat surface | Pre study | 1.4 ± 0.5 | 1 (1-2) | 1.32 ± 0.48 | 1 (1-2) | 1.4 ± 0.58 | 1 (1-3) | 0.95 |
| | Week 4 | 1.4 ± 0.5 | 1 (1-2) | 1.28 ± 0.46 | 1 (1-2) | 1.4 ± 0.58 | 1 (1-3) | 0.59 |
| | Week 8 | 0.84 ± 0.62 | 1 (0-2) | 0.88 ± 0.83 | 1 (0-3) | 1.36 ± 0.57 | 1 (1-3) | **0.01** |
| **p-value (Baseline and Week 8) within group** | | **0.009** | | **0.06** | | **>0.99** | | **-** |
| 2. Pain during standing | Pre study | 1.36 ± 0.49 | 1 (1-2) | 1.48 ± 0.51 | 1 (1-2) | 1.52 ± 0.51 | 2 (1-2) | 0.66 |
| | Week 4 | 1.24 ± 0.44 | 1 (1-2) | 1.2 ± 0.41 | 1 (1-2) | 1.48 ± 0.51 | 1 (1-2) | 0.08 |
| | Week 8 | 0.88 ± 0.53 | 1 (0-2) | 1.04 ± 0.35 | 1 (0-2) | 1.44 ± 0.51 | 1 (1-2) | **0.001** |
| **p-value (Baseline and Week 8) within group** | | **0.04** | | 0.05 | | >0.99 | | - |
| 3. Pain when in bed at night | Pre study | 1.2 ± 0.41 | 1 (1-2) | 1.24 ± 0.44 | 1 (1-2) | 1.24 ± 0.44 | 1 (1-2) | 0.35 |
| | Week 4 | 1.12 ± 0.33 | 1 (1-2) | 1.2 ± 0.41 | 1 (1-2) | 1.24 ± 0.44 | 1 (1-2) | 0.75 |
| | Week 8 | 0.6 ± 0.76 | 0 (0-3) | 0.72 ± 0.74 | 1 (0-2) | 1.04 ± 0.54 | 1 (0-2) | **0.04** |
| p-value (Baseline and Week 8) within group | | **0.007** | | **0.02** | | 0.87 | | - |
| 4. Pain during squatting | Pre study | 2.52 ± 0.51 | 3 (2-3) | 2.6 ± 0.65 | 3 (2-4) | 2.52 ± 0.51 | 3 (2-3) | 0.99 |
| | Week 4 | 2.12 ± 0.73 | 2 (1-3) | 2.28 ± 0.94 | 2 (1-4) | 2.52 ± 0.51 | 3 (2-3) | 0.23 |
| | Week 8 | 1.6 ± 0.58 | 2 (1-3) | 2 ± 0.82 | 2 (1-4) | **2.4** ± 0.65 | 2 (1-3) | **0.0003** |
| **p-value (Baseline and Week 8) within group** | | **<0.0001** | | **0.009** | | >0.99 | | - |
| 5. Pain when sitting or lying | Pre study | 1.68 ± 0.48 | 2 (1-2) | 1.68 ± 0.48 | 2 (1-2) | 1.6 ± 0.5 | 2 (1-2) | 0.88 |
| | Week 4 | 1.44 ± 0.58 | 1 (0-2) | 1.48 ± 0.51 | 1 (1-2) | 1.6 ± 0.5 | 2 (1-2) | 0.68 |
| | Week 8 | 1.12 ± 0.44 | 1 (0-2) | 1.12 ± 0.6 | 1 (0-2) | 1.32 ± 0.56 | 1 (0-2) | 0.14 |
| **p-value (Baseline and Week 8) within group** | | **0.01** | | **0.01** | | 0.41 | | - |
| 6. Stiffness after waking up in the morning | Pre study | 1.68 ± 0.48 | 2 (1-2) | 1.48 ± 0.51 | 1 (1-2) | 1.64 ± 0.49 | 2 (1-2) | 0.46 |
| | Week 4 | 1.48 ± 0.51 | 1 (1-2) | 1.24 ± 0.44 | 1 (1-2) | 1.6 ± 0.5 | 2 (1-2) | 0.05 |
| | Week 8 | 0.92 ± 0.64 | 1 (0-2) | 0.84 ± 0.62 | 1 (0-2) | 1.48 ± 0.51 | 1 (1-2) | **0.0007** |
| **p-value (Baseline and Week 8) within group** | | **0.0005** | | **0.006** | | >0.99 | | - |
| 7. Stiffness after sitting or lying for a period | Pre study | 1.84 ± 0.37 | 2 (1-2) | 1.76 ± 0.44 | 2 (1-2) | 1.64 ± 0.49 | 2 (1-2) | 0.39 |
| | Week 4 | 1.6 ± 0.5 | 2 (1-2) | 1.36 ± 0.49 | 1 (1-2) | 1.64 ± 0.49 | 2 (1-2) | 0.12 |
| | Week 8 | 1.04 ± 0.45 | 1 (0-2) | 0.96 ± 0.68 | 1 (0-2) | 1.28 ± 0.54 | 1 (0-2) | 0.06 |
| **p-value (Baseline and Week 8) within group** | | **0.0003** | | **0.0007** | | 0.17 | | - |
| 8. Stiffness after walking | Pre study | 1.8 ± 0.41 | 2 (1-2) | 1.84 + 0.37 | 2 (1-2) | 1.68 ± 0.48 | 2 (1-2) | 0.54 |
| | Week 4 | 1.52 ± 0.51 | 2 (1-2) | 1.56 ± 0.51 | 2 (1-2) | 1.64 ± 0.49 | 2 (1-2) | 0.25 |
| | Week 8 | 1.08 ± 0.57 | 1 (0-2) | 1.12 ± 0.73 | 1 (0-2) | 1.32 ± 0.56 | 1 (0-2) | **0.03** |
| **p-value (Baseline and Week 8) within group** | | **0.002** | | **0.002** | | 0.17 | | - |
| 9. Difficulty in walking up & down stairs | Pre study | 2.24 ± 0.44 | 2 (2-3) | 2.32 ± 0.69 | 2 (1-4) | 2.32 ± 0.56 | 2 (1-3) | 0.9 |
| | Week 4 | 2.04 ± 0.61 | 2 (1-3) | 2.08 ± 0.86 | 2 (1-4) | 2.28 ± 0.46 | 2 (2-3) | 0.19 |
| | Week 8 | 1.48 ± 0.59 | 1 (1-3) | 1.72 ± 1.02 | 1 (1-4) | 2 ± 0.58 | 2 (1-3) | **0.01** |
| **p-value (Baseline and Week 8) within group** | | **0.0002** | | **0.007** | | 0.27 | | - |
| 10. Difficulty in getting in & out of a car | Pre study | 0.48 ± 0.82 | 0 (0-2) | 0.72 ± 0.89 | 0 (0-2) | 0.72 ± 0.94 | 0 (0-2) | 0.55 |
| | Week 4 | 0.44 ± 0.77 | 0 (0-2) | 0.64 ± 0.81 | 0 (0-2) | 0.68 ± 0.9 | 0 (0-2) | 0.6 |
| | Week 8 | 0.4 ± 0.71 | 0 (0-2) | 0.64 ± 0.81 | 0 (0-2) | 0.72 ± 0.94 | 0 (0-2) | 0.46 |
| **p-value (Baseline and Week 8) within group** | | >0.99 | | >0.99 | | >0.99 | | - |
| 11. Difficulty in standing up from a chair | Pre study | 1.6 ± 0.5 | 2 (1-2) | 1.64 ± 0.49 | 2 (1-2) | 1.76 ± 0.52 | 2 (1-3) | 0.62 |
| | Week 4 | 1.48 ± 0.51 | 1 (1-2) | 1.52 ± 0.51 | 2 (1-2) | 1.76 ± 0.52 | 2 (1-3) | 0.24 |
| | Week 8 | 1.08 ± 0.4 | 1 (0-2) | 1.28 ± 0.61 | 1 (0-2) | 1.4 ± 0.5 | 1 (1-2) | 0.05 |
| **p-value (Baseline and Week 8) within group** | | **0.03** | | 0.23 | | 0.17 | | - |
| 12.Difficulty in bending over to pick up an object from the floor | Pre study | 2.08 ± 0.4 | 2 (1-3) | 2.28 ± 0.54 | 2 (2-4) | 2.28 ± 0.46 | 2 (2-3) | 0.37 |
| | Week 4 | 1.8 ± 0.58 | 2 (1-3) | 1.84 + 0.75 | 2 (1-3) | 2.24 ± 0.44 | 2 (2-3) | 0.09 |
| | Week 8 | 1.32 ± 0.63 | 1 (0-3) | 1.48 ± 0.87 | 1 (0-4) | 1.92 ± 0.64 | 2 (1-3) | **0.007** |
| **p-value (Baseline and Week 8) within group** | | **0.0005** | | **0.0002** | | 0.17 | | - |
| 13.Difficulty in dressing | Pre study | 1.08 ± 0.49 | 1 (0-2) | 1.28 ± 0.54 | 1 (0-2) | 1.2 ± 0.41 | 1 (1-2) | 0.23 |
| | Week 4 | 1.04 ± 0.45 | 1 (0-2) | 1.12 ± 0.53 | 1 (0-2) | 1.2 ± 0.41 | 1 (1-2) | 0.7 |
| | Week 8 | 0.44 ± 0.58 | 0 (0-2) | 0.6 ± 0.76 | 0 (0-2) | 0.96 ± 0.68 | 1 (0-2) | **0.03** |
| **p-value (Baseline and Week 8) within group** | | **0.003** | | **0.004** | | 0.61 | | - |

| | | | | | | | | |
|---|---|---|---|---|---|---|---|---|
| Score: 0- None, 1- Mild, 2- Moderate, 3- Severe, 4- Very severe *These groups showed a statistically significant reduction in pain compared to the placebo group | | | | | | | | |

### Statistics tool used:

For comparisons among groups, the non-parametric ANOVA (Kruskal-Wallis test) followed by Dunn's multiple comparisons test was used, and within-group comparisons across all time points (Baseline to post-study) were performed using the Friedman test with Dunn's multiple comparisons test.

### Interpretation:

### 1. Pain during walking on a flat surface:

Statistically significant reduction in pain was observed in FIBER ENTRAPPED (p=0.0009) group at week 8, within group analysis. This was not observed in comparator & placebo groups.

### 2. Pain while standing:

FIBER ENTRAPPED (p=0.04) group showed a statistically significant reduction in pain, in within group analysis at week 8. However, this was not observed in Comparator and placebo groups.

Among the group analysis showed a significance in FIBER ENTRAPPED (p=0.002) and comparator (p=0.04) groups at week 8 compared to placebo group.

### 3. Pain when in bed at night:

Within group analysis showed statistical significance in FIBER ENTRAPPED (p=0.01) and comparator groups (p=0.02) at week 8.

Among the group analysis showed significance at week 8 in FIBER ENTRAPPED (p=0.04) group compared to placebo group.

### 4. Pain during squatting:

Within group analysis showed statistical significance in FIBER ENTRAPPED (p=<0.0001) and comparator (p=0.009) groups at week 8.

Among the group analysis showed significance at week 8 in FIBER ENTRAPPED (p=0.0003) groups compared to placebo groups.

### 5. Pain when sitting or lying:

Within group analysis showed statistical significance in FIBER ENTRAPPED (p=0.01) and comparator (p=0.01) groups at week 8.

Among the group analysis showed no statistical significance across all groups.

### 6. Stiffness after waking up in the morning:

Within group analysis showed statistical Significance in FIBER ENTRAPPED (p=0.0005) and comparator (p=0.006) at week 8.

Among the group analysis showed significance at week 8 in FIBER ENTRAPPED (p=0.01) and Comparator (p=0.03) groups compared to placebo.

### 7. Stiffness after sitting or lying for a period

FIBER ENTRAPPED (p-0.0003) and Comparator (p=0.0007) groups showed significance in within group analysis at week 8.

No significance was observed across all groups.

### 8. Stiffness after walking:

Within-group analysis showed a statistically significant reduction in stiffness after walking in FIBER ENTRAPPED (p=0.002) and Comparator (p=0.002) groups at week 8.

### 9. Difficulty walking up/down stairs:

Within-group analysis showed a statistically significant reduction in difficulty in walking in FIBER ENTRAPPED (p=0.0002) and Comparator (p=0.007) groups at week 8.

Among the group comparison demonstrated statistical significance in FIBER ENTRAPPED (p=0.03) at week 8 compared to placebo.

### 10. Difficulty getting in/out of car:

Within-group and among the groups analysis showed no change in difficulty getting in/out of car in active, comparator and placebo groups

### 11. Difficulty in standing up from a chair:

Within-group analysis showed a statistically significant reduction in difficulty in standing up from a chair in FIBER ENTRAPPED (p=0.03) groups at week 8, this was not observed in comparator and placebo groups.

Among the group comparison showed no statistically significance across all the groups.

### 12. Difficulty in bending over to pick up objects from the floor:

Within-group analysis showed statistical significance in FIBER ENTRAPPED (p=0.0005) and comparator (p=0.0002) groups at week 8, this was not observed in placebo.

Among the group comparison showed statistical significance in FIBER ENTRAPPED (p=0.03) groups at week 8 compared to placebo.

### 13. Difficulty in dressing:

Within-group analysis showed a statistically significant reduction in difficulty in dressing in FIBER ENTRAPPED (p=0.003) and comparator (p=0.004) groups at week 8, this was not observed in placebo group.

### Overall interpretation:

FIBER ENTRAPPED group demonstrated consistent within-group improvements across multiple WOMAC pain subscale parameters from baseline to 8 weeks, indicating a reduction in pain and stiffness. These improvements were statistically significant compared with placebo in several domains, particularly for pain during walking, standing, squatting, and stiffness measures. However, when compared with the comparator group, FIBER ENTRAPPED groups did not show a statistically significant difference throughout the study period.

### 2. Changes from base line to 8 weeks in following laboratory parameter(s): *Hs-C Reactive Protein & ESR

**Table 03: Comparison of ESR**

| **Study groups** | **Baseline** | **Week 8** | **P value (Baseline Vs. Week 8)** |
|---|---|---|---|
| | **Mean ± SD** | | |
| **FIBER ENTRAPPED** | 66.04±29.72 | 38.04±18.34 | <0.0001 |
| **Comparator** | 66.08±28.81 | 42.28±21.16 | 0.0001 |
| **Placebo** | 61.24±21.3 | 49.88±16.44 | 0.04 |
| **P value (among the groups)** | 0.97 | 0.06 | - |

### Statistics tool used:

Non-parametric ANOVA (Kruskal-Wallis) test and Dunn's multiple comparisons test were used for among the group's comparisons, and student t test was done for within the group's comparisons between Baseline and Week 8

### Interpretation:

Erythrocyte Sedimentation Rate (ESR) levels demonstrated a statistically significant reduction in the FIBER ENTRAPPED, Comparator, and Placebo groups in within-group analysis. This reduction in ESR indicates a decrease in systemic inflammation, reflecting improved disease activity and a favourable therapeutic response. The reduction observed in the Placebo group is likely attributable to concomitant medication use rather than the investigational intervention. However, between-group analysis showed no statistically significant differences. Notably, with a higher dose of Comparator, its efficacy appears comparable to FIBER ENTRAPPED.

**Table 04: Comparison of CRP**

| **Study groups** | **Baseline** | **Week 8** | **P value** |
|---|---|---|---|
| | **Mean ± SD** | | |
| **FIBER ENTRAPPED** | 8.69±5.68 | 8.42±7.87 | 0.52 |
| **Comparator** | 9.12±9.63 | 8.32±4.69 | 0.94 |
| **Placebo** | 8.03±3.27 | 7.34±2.64 | 0.49 |
| **P value among the groups** | 0.74 | 0.88 | |

### Statistics tool used:

Non-parametric ANOVA (Kruskal-Wallis) test and Dunn's multiple comparisons test were used for among the group's comparisons, and student t test was done for within the group's comparisons between Baseline and Week 8

### Interpretation:

C-Reactive Protein (CRP) levels demonstrated a mild reduction in mean values across all study groups from baseline to post-study. FIBER ENTRAPPED formulations maintained a favourable inflammatory profile, comparable to the active comparator. However, no statistically significant differences were observed either in within-group or between-group analyses. Notably, with a higher dose of Comparator, its efficacy appears comparable to FIBER ENTRAPPED groups

### 3. Change in baseline to 8 weeks in Patient's Global Assessment of osteoarthritis and low back ache.

**Table 05: Patient's Global Assessment of osteoarthritis and low back ache**

| **Study visits** | **Statistics** | **FIBER ENTRAPPED** | **Comparator** | **Placebo** | **p-value among groups** |
|---|---|---|---|---|---|
| **Baseline** | **Mean±SD** | 5.76 ± 1.05 | 6.4 ± 1.29 | 6.2 ± 1.16 | 0.38 |
| | **Median (min-max)** | 6 (4-8) | 6 (5-9) | 6 (4-9) | |
| **Week 4** | **Mean±SD** | 5.08 ± 1.22 | 5.56 ± 1.69 | 6.12 ± 1.13 | 0.01 |
| | **Median (min-max)** | 5 (3-8) | 5 (4-9) | 6 (4-9) | |
| **Week 8** | **Mean±SD** | 3.96 ± 1.51 | 4.68 ± 2.16 | 5.8 ± 1.16 | <0.0001 |
| | **Median (min-max)** | 3 (2-9) | 4 (3-9) | 6 (4-9) | |
| **p-value (Baseline and Week 8) within group** | | <0.0001 | <0.0001 | 0.10 | |

| | | | | | |
|---|---|---|---|---|---|
| *These groups showed a statistically significant reduction in pain compared to placebo group | | | | | |

### Score:

0 No pain / No problem: No symptoms or issues experienced.
1-3 Mild: Very minimal pain or discomfort, does not interfere with daily activities
4-6 Moderate: Some discomfort or limitation, but still able to manage daily activities with minor difficulty.
7-9 Severe: Significant pain or functional impairment, with difficulty performing many activities of daily living.
10 Worst possible pain or symptoms: Intolerable pain, unable to perform daily activities.

### Statistics tool used:

For comparisons among groups, the non-parametric ANOVA (Kruskal-Wallis test) followed by Dunn's multiple comparisons test was used, and within-group comparisons across all time points (Baseline to post-study) were performed using the Friedman test with Dunn's multiple comparisons test.

### Interpretation:

Patient's Global Assessment of Osteoarthritis and Low Back Ache (PGA) score demonstrated a statistically significant reduction in within group analysis from Week 4 onwards in the comparator (p=0.01) group, which was sustained throughout the study period. FIBER ENTRAPPED (p=<0.0001) groups showed a significant reduction at week 8. This was not observed in placebo group.

Among the group analysis indicated that the FIBER ENTRAPPED (p=0.02) group showed a statistically significant pain reduction from week 4 onwards, and it's sustained throughout the study period compared to placebo. Comparator group showed a comparable efficacy to FIBER ENTRAPPED group

The comparator (p=0.01) group showed a statistically significant reduction compared to placebo on week

### 4. Number of Subjects with a response rate measured by the Outcome

Measures for Rheumatology Committee and Osteoarthritis Research Society International Standing Committee for Clinical Trials Response Criteria Initiative (OMERACT-OARSI).

**Table 06: Comparison of OMERACT-OARSI**

| **Parameters** | **Visits** | **FIBER ENTRAPPED** | | **Comparator** | | **Placebo** | | **p Value among the groups** |
|---|---|---|---|---|---|---|---|---|
| | | **Mean ± SD** | **Median (min-max)** | **Mean ± SD** | **Median (min-max)** | **Mean ± SD** | **Median (min-max)** | |
| | Pre study | 2.04 ± 0.45 | 2 (1-3) | 2.12 ± 0.53 | 2 (1-3) | 2.04 ± 0.45 | 2 (1-3) | 0.86 |
| | Week 4 | 1.56 ± 0.65 | 1 (1-3) | 1.64 ± 0.81 | 1 (1-3) | 1.96 ± 0.54 | 2 (1-3) | 0.1 |
| 1. How intense has constant hip/knee pain been | Week 8 | 1.04 ± 0.68 | 1 (0-3) | 1.48 ± 0.77 | 1 (1-3) | 1.72 ± 0.68 | 2 (1-3) | **0.0008** |
| **p-value (Baseline and Week 8) within group** | | **<0.0001** | | **0.002** | | 0.27 | | |
| 2.How much has your constant hip/knee has affected your sleep | Pre study | 1.76 ± 0.6 | 2 (1-3) | 1.72 ± 0.74 | 2 (1-3) | 1.8 ± 0.76 | 2 (1-3) | 0.97 |
| | Week 4 | 1.56 + 0.58 | 2 (1-3) | 1.52 ± 0.77 | 1 (1-3) | 1.68 ± 0.69 | 2 (1-3) | 0.57 |
| | Week 8 | 1 ± 0.5 | 1 (0-3) | 1.4 ± 0.82 | 1 (0-3) | 1.6 ± 0.82 | 1 (1-4) | **0.006** |
| **p-value (Baseline and Week 8) within group** | | **0.0005** | | 0.27 | | 0.87 | | |
| 3.How intense has constant hip/knee affected your overall quality of life? | Pre study | 1.92 ± 0.49 | 2 (1-3) | 2.04 ± 0.73 | 2 (1-4) | 2.08 ± 0.57 | 2 (1-3) | 0.79 |
| | Week 4 | 1.4 ± 0.5 | 1 (1-2) | 1.6 ± 0.87 | 1 (1-4) | 2.04 ± 0.61 | 2 (1-3) | **0.003** |
| | Week 8 | 0.88 ± 0.6 | 1 (0-3) | 1.36 ± 0.91 | 1 (0-4) | 1.72 ± 0.79 | 2 (1-4) | **0.0003** |
| **p-value (Baseline and Week 8) within group** | | **<0.0001** | | **0.002** | | 0.17 | | |
| 4.How frustrated or annoyed have you been by your hip/knee constant pain? | Pre study | 2 ± 0.65 | 2 (1-3) | 2.04 ± 0.61 | 2 (1-3) | 2.08 ± 0.57 | 2 (1-3) | 0.95 |
| | Week 4 | 1.6 ± 0.65 | 2 (1-3) | 1.56 ± 0.71 | 1 (1-3) | 2 ± 0.58 | 2 (1-3) | 0.02 |
| | Week 8 | 1.04 ± 0.61 | 1 (0-3) | 1.24 ± 0.83 | 1 (0-3) | 1.8 ± 0.58 | 2 (1-3) | **<0.0001** |
| **p-value (Baseline and Week 8) within group** | | **<0.0001** | | **0.0004** | | 0.41 | | |
| 5.How upset or worried have you been by your constant hip/knee pain? | Pre study | 1.92 ± 0.57 | 2 (1-3) | 2.08 ± 0.49 | 2 (1-3) | 2.08 ± 0.49 | 2 (1-3) | 0.68 |
| | Week 4 | 1.64 ± 0.49 | 2 (1-2) | 1.44 ± 0.71 | 1 (1-3) | 2 ± 0.41 | 2 (1-3) | **0.002** |
| | Week 8 | 1.08 ± 0.49 | 1 (0-3) | 1.28 ± 0.79 | 1 (0-3) | 1.64 ± 0.76 | 2 (1-4) | **0.002** |
| **p-value (Baseline and Week 8) within group** | | **0.0002** | | **0.0002** | | 0.06 | | |
| 6.How intense has your most severe pain that comes and goes been? | Pre study | 1.96 ± 0.54 | 2 (1-3) | 2.04 ± 0.54 | 2 (1-3) | 2.24 ± 0.66 | 2 (1-4) | 0.49 |
| | Week 4 | 1.52 ± 0.59 | 1 (1-3) | 1.44 ± 0.71 | 1 (1-3) | 2.16 ± 0.62 | 2 (1-4) | **0.0005** |
| | Week 8 | 0.92 ± 0.64 | 1 (0-3) | 1.16 ± 0.85 | 1 (0-3) | 1.92 ± 0.64 | 2 (1-4) | **<0.0001** |
| **p-value (Baseline and Week 8) within group** | | **<0.0001** | | **<0.0001** | | 0.27 | | |
| 7.How frequently has this hip/knee pain that comes and goes occurred? | Pre study | 1.96 ± 0.54 | 2 (1-3) | 2.2 ± 0.65 | 2 (1-4) | 2 ± 0.5 | 2 (1-3) | 0.51 |
| | Week 4 | 1.56 ± 0.65 | 1 (1-3) | 1.52 ± 0.87 | 1 (1-4) | 1.92 ± 0.4 | 2 (1-3) | **0.004** |
| | Week 8 | 0.88 ± 0.67 | 1 (0-3) | 1.4 ± 1 | 1 (0-4) | 1.56 ± 0.71 | 1 (1-4) | **0.0009** |
| **p-value (Baseline and Week 8) within group** | | **<0.0001** | | **0.0002** | | 0.06 | | |
| 8.How much has your hip/knee pain that comes and goes affected your quality of life? | Pre study | 1.92 ± 0.4 | 2 (1-3) | 2.04 ± 0.68 | 2 (1-4) | 2.12 ± 0.53 | 2 (1-3) | 0.55 |
| | Week 4 | 1.44 ± 0.51 | 1 (1-2) | 1.48 ± 0.87 | 1 (1-4) | 2.08 ± 0.49 | 2 (1-3) | **<0.0001** |
| | Week 8 | 0.88 ± 0.6 | 1 (0-3) | 1.32 ± 0.99 | 1 (0-4) | 1.92 ± 0.64 | 2 (1-4) | **<0.0001** |
| **p-value (Baseline and Week 8) within group** | | **<0.0001** | | **0.001** | | 0.87 | | |
| 9.How frustrated or annoyed have you been by your hip/knee pain that comes and goes? | Pre study | 2.08 ± 0.64 | 2 (1-3) | 1.96 ± 0.54 | 2 (1-3) | 2.12 ± 0.6 | 2 (1-3) | 0.55 |
| | Week 4 | 1.52 ± 0.59 | 1 (1-3) | 1.44 ± 0.7 | 1 (1-3) | 2.04 ± 0.61 | 2 (1-3) | **0.0002** |
| | Week 8 | 0.88 ± 0.67 | 1 (0-3) | 1.16 ± 0.9 | 1 (0-3) | 1.8 ± 0.82 | 2 (1-4) | **0.0002** |
| **p-value (Baseline and Week 8) within group** | | **<0.0001** | | **0.0002** | | 0.27 | | |
| 10.How upset or worried have you been by your | Pre study | 1.84 ± 0.55 | 2 (1-3) | 1.92 ± 0.57 | 2 (1-3) | 2.24 ± 0.6 | 2 (1-4) | 0.09 |
| | Week 4 | 1.44 ± 0.51 | 1 (1-2) | 1.4 ± 0.71 | 1 (1-3) | 2.2 ± 0.58 | 2 (1-4) | **<0.0001** |
| hip/knee pain that comes and goes? | Week 8 | 0.96 ± 0.61 | 1 (0-3) | 1.2 ± 0.87 | 1 (0-3) | 1.72 ± 0.79 | 2 (1-4) | **0.0008** |
| **p-value (Baseline and Week 8) within group** | | **<0.0001** | | **0.0007** | | 0.41 | | |

| | | | | | | | | |
|---|---|---|---|---|---|---|---|---|
| Score: Not at all - 0, Mildly - 1, Moderately - 2, Severely - 3 and extremely - 4 *These groups showed a statistically significant reduction in pain compared to the placebo group | | | | | | | | |

### Statistics tool used:

For comparisons among groups, the non-parametric ANOVA (Kruskal-Wallis test) followed by Dunn's multiple comparisons test was used, and within-group comparisons across all time points (Baseline to post-study) were performed using the Friedman test with Dunn's multiple comparisons test.

### Interpretation:

### 1. How intense has constant hip/knee pain been:

Within-group analysis showed a statistically significant in pain reduction, in Comparator (p=0.03) group from week 4 onwards and its sustained throughout the study period and FIBER ENTRAPPED (<0.0001) group showed statistical significance at week 8.

Among the group comparison demonstrated a statistically significant difference in FIBER ENTRAPPED (p=0.0006) groups at week 8 compared to placebo.

### 2. How much has your constant hip/knee:

Within-group analysis showed statistical significance in FIBER ENTRAPPED (p=0.0005) groups at week 8, this was not observed in placebo and comparator groups.

Among the group analysis showed significant differences in FIBER ENTRAPPED (p=0.01) groups at Week 8 compared to placebo group.

### 3. How much has your hip/knee pain that comes and goes affected your quality of life?

FIBER ENTRAPPED (p=0.04) groups showed statistical significance in within-group analysis at week 4 and its sustained throughout the study period, Comparator (p=0.001) group showed a statistically significant at week 8.

Among the group analysis showed a statistically significant reduction in pain from Week 4 onwards in FIBER ENTRAPPED (0.02) and comparator (p=0.03) groups compared to placebo group and it was sustained throughout the study period, but it was not sustained in comparator group.

### 4. How frustrated or annoyed have you been by your hip/knee constant pain?

Within-group analysis showed statistical significance in FIBER ENTRAPPED (p=<0.0001) and Comparator (p=0.0004) groups showed significance at week 8. Among the group analysis showed statistical significance FIBER ENTRAPPED (p=0.0003) and comparator (p=0.008) groups showed statistical significance compared to placebo at week 8.

### 5. How upset or worried have you been by your constant hip/knee pain?

In within group analysis, Comparator (p=0.003) group showed a statistical significance from week 4 onwards and it sustained throughout the study period. FIBER ENTRAPPED (p=0.0001) group showed statistical significance at week 8. Among the group analysis showed a statistically significant reduction in pain in comparator (p=0.001) group at week 4, it was sustained throughout the study period however, it was not sustained in comparator. At week 8, FIBER ENTRAPPED (p=0.01) group showed a significance compared to placebo group.

### 6. How intense has your most severe pain that comes and goes been?

In within group analysis, Comparator (p=0.007) group showed statistical significance from week 4 onwards and its sustained throughout the study period. FIBER ENTRAPPED (p=<0.0001) groups demonstrated statistical significance at week 8.

Among the group analysis showed a statistically significant reduction in intensity of severe pain in FIBER ENTRAPPED (p=0.03) and comparator (p=0.0001) groups at week 4 compared to placebo group, it was sustained throughout the study period. How frequently has this hip/knee pain that comes and goes occurred?

Within-group analysis showed a statistically significant reduction in frequency of pain in Comparator (p=0.002) groups from week 4 onwards and it sustained throughout the study period, at week 8 FIBER ENTRAPPED (p=<0.0001) group showed statistical significance.

Among the group comparison demonstrated a statistically significant reduction in pain in Comparator (p=0.01) from week 4 onwards compared to placebo. It was not sustained comparator. The FIBER ENTRAPPED (p=0.0007) group showed significance at week 8 compared to placebo.

### 7. How much has your hip/knee pain that comes and goes affected your quality of life?

Within-group analysis showed statistical significance in Comparator (p=0.01) groups from week 4 onwards and its sustained throughout the study period, FIBER ENTRAPPED (p=<0.0001) group showed significance at week 8. This was not observed in Placebo.

Among the group comparison demonstrated a statistically significant in FIBER ENTRAPPED (p=0.0002) and comparator (p=0.002) groups from week 4 onwards compared to placebo and it sustained throughout the study period.

### 8. How frustrated or annoyed have you been by your hip/knee pain that comes and goes?

Within-group analysis showed statistical significance in FIBER ENTRAPPED(p=0.04) and Comparator (p=0.03) groups from week 4 onwards and its sustained throughout the study period.

Among the group comparison demonstrated a statistically significant difference in FIBER ENTRAPPED (p=0.04) and comparator (p=0.003) group from week 4 onwards compared to placebo and it sustained throughout the study period.

### 9. How upset or worried have you been by your hip/knee pain that comes and goes?

Comparator (p=0.007) groups showed significant in within-group analysis at week 4 and it sustained throughout the study period, FIBER ENTRAPPED (p=<0.0001) showed a statistically significant difference in week 8.

Among the group analysis showed a statistical significance from Week 4 onwards in FIBER ENTRAPPED (p=0.0005) and Comparator (<0.0001) groups compared to placebo and it sustained throughout the study period.

### Overall interpretation:

FIBER ENTRAPPED treatments demonstrated significant improvements in reducing constant and intermittent hip/knee pain, enhancing quality of life, and alleviating emotional distress compared to placebo. FIBER ENTRAPPED exhibited more pronounced effects at Week 8. These findings indicate that FIBER ENTRAPPED were effective, with FIBER ENTRAPPED producing benefits at later time points.

### 5. Changes from baseline to 8 weeks in Quality of life- Questionnaires (Short Form Health-12)

**Table 07: QoL - SF12 Questionnaire**

| **Parameters With Visits** | **Visits** | **FIBER ENTRAPPED** | | **Comparator** | | **Placebo** | | **p Value among the groups** |
|---|---|---|---|---|---|---|---|---|
| | | **Mean ± SD** | **Median (min-max)** | **Mean ± SD** | **Median (min-max)** | **Mean ± SD** | **Median (min-max)** | |
| In general, would you say your health is: 1= excellent, 2= very good, 3= good, 4= fair, 5= poor | Pre study | 3.4 ± 0.5 | 3 (3-4) | 3.32 ± 0.48 | 3 (3-4) | 3.36 ± 0.64 | 3 (2-4) | 0.86 |
| | Week 4 | 3.36 ± 0.49 | 3 (3-4) | 3.24 ± 0.66 | 3 (2-5) | 3.24 ± 0.6 | 3 (2-4) | 0.67 |
| | Week 8 | 2.44 ± 0.58 | 2 (2-4) | 2.64 ± 1.04 | 2 (2-5) | 3.08 ± 0.7 | 3 (2-5) | **0.001** |
| **p-value (Baseline and Week 8) within group** | | **<0.0001** | | **0.002** | | 0.41 | | - |
| 1. Moderate activities, such as moving a table, pushing a vacuum cleaner, bowling, or playing golf 1= yes, limited a lot, 2= yes, limited a little, 3= no not limited at all | Pre study | 1.88 ± 0.6 | 2 (1-3) | 1.92 ± 0.57 | 2 (1-3) | 1.84 ± 0.47 | 2 (1-3) | 0.96 |
| | Week 4 | 1.8 ± 0.5 | 2 (1-3) | 1.88 ± 0.53 | 2 (1-3) | 1.84 ± 0.47 | 2 (1-3) | 0.92 |
| | Week 8 | 1.96 ± 0.54 | 2 (1-3) | 1.92 ± 0.57 | 2 (1-3) | 1.88 ± 0.44 | 2 (1-3) | 0.94 |
| **p-value (Baseline and Week 8) within group** | | >0.9999 | | >0.9999 | | >0.9999 | | - |
| 2. Climbing several flights of stairs: 1= yes, limited a lot, 2= yes, limited a little, 3= no not limited at all | Pre study | 1.8 ± 0.65 | 2 (1-3) | 1.68 ± *0.56* | 2 (1-3) | 1.56 ± 0.58 | 2 (1-3) | 0.58 |
| | Week 4 | 1.76 ± 0.52 | 2 (1-3) | 1.72 ± 0.54 | 2 (1-3) | 1.56 ± 0.58 | 2 (1-3) | 0.41 |
| | Week 8 | 1.96 ± 0.35 | 2 (1-3) | 1.8 ± 0.41 | 2 (1-2) | 1.72 ± 0.54 | 2 (1-3) | 0.19 |
| **p-value (Baseline and Week 8) within group** | | >0.9999 | | >0.9999 | | >0.9999 | | - |
| 3. Accomplished less than you would like: 1= yes, 2= no | Pre study | 1 ± 0 | 1 (1-1) | ± 0 | 1 (1-1) | 1.04 ± 0.2 | 1 (1-2) | 0.39 |
| | Week 4 | 1 ± 0 | 1 (1-1) | ± 0 | 1 (1-1) | 1.04 ± 0.2 | 1 (1-2) | 0.39 |
| | Week 8 | 1.32 ± 0.48 | 1 (1-2) | 1.32 ± 0.48 | 1 (1-2) | 1.2 ± 0.41 | 1 (1-2) | 0.72 |
| **p-value (Baseline and Week 8) within group** | | 0.27 | | 0.27 | | >0.9999 | | - |
| 4. Were limited in the kind of work or other activities: 1= yes, 2= no | Pre study | 1 ± 0 | 1 (1-1) | 1 ± 0 | 1 (1-1) | 1.04 ± 0.2 | 1 (1-2) | 0.39 |
| | Week 4 | 1 ± 0 | 1 (1-1) | 1 ± 0 | 1 (1-1) | 1.04 + 0.2 | 1 (1-2) | 0.39 |
| | Week 8 | 1.32 ± 0.48 | 1 (1-2) | 1.28 ± 0.46 | 1 (1-2) | 1.2 ± 0.41 | 1 (1-2) | 0.76 |
| **p-value (Baseline and Week 8) within group** | | 0.27 | | 0.41 | | >0.9999 | | - |
| 5. Accomplished less than you would like: 1= yes, 2= no | Pre study | 1 ± 0 | 1 (1-1) | 1 ± 0 | 1 (1-1) | 1 ± 0 | 1 (1-1) | N/Ap |
| | Week 4 | 1 ± 0 | 1 (1-1) | 1 ± 0 | 1 (1-1) | 1 ± 0 | 1 (1-1) | 0.11 |
| | Week 8 | 1.32 ± 0.48 | 1 (1-2) | 1.28 ± 0.46 | 1 (1-2) | 1.2 ± 0.41 | 1 (1-2) | 0.81 |
| **p-value (Baseline and Week 8) within group** | | 0.27 | | 0.41 | | 0.87 | | - |
| 6. Didn't do work or other activities as carefully as usual: 1= yes, 2= no | Pre study | 1 ± 0 | 1 (1-1) | 1 ± 0 | 1 (1-1) | 1 ± 0 | 1 (1-1) | N/Ap |
| | Week 4 | 1 ± 0 | 1 (1-1) | 1 ± 0 | 1 (1-1) | 1 ± 0 | 1 (1-1) | N/Ap |
| | Week 8 | 1.24 ± 0.44 | 1 (1-2) | 1.44 ± 0.71 | 1 (1-4) | 1.28 ± 0.46 | 1 (1-2) | 0.78 |
| **p-value (Baseline and Week 8) within group** | | **0.003** | | 0.17 | | 0.41 | | - |
| 7. During the past 4 weeks, how much did pain interfere with your normal work (including both work outside the home and housework)? 1= not at all, 2= a little bit, 3= moderately, 4= quite a bit, 5= extremely | Pre study | 2.92 ± 0.57 | 3 (2-4) | 2.96 ± 0.54 | 3 (2-4) | 3.08 ± 0.4 | 3 (2-4) | 0.70 |
| | Week 4 | 2.88 ± 0.6 | 3 (2-4) | 2.72 ± 0.74 | 3 (2-4) | 3.08 ± 0.4 | 3 (2-4) | 0.16 |
| | Week 8 | 2.24 ± 0.52 | 2 (2-4) | 2.44 ± 0.77 | 2 (2-4) | 2.88 ± 0.6 | 3 (2-4) | **0.0004** |
| **p-value (Baseline and Week 8) within group** | | **0.0009** | | **0.02** | | 0.87 | | - |
| 8. Have you felt calm and peaceful? 1= all of the time, 2= most of the time, 3= a good bit of the time, 4= some of the time, 5= a little of the time, 6= none of the time | Pre study | 3.4 ± 0.5 | 3 (3-4) | 3.36 ± 0.7 | 3 (3-5) | 3.4 ± 0.58 | 3 (2-4) | 0.66 |
| | Week 4 | 3.2 ± 0.58 | 3 (2-4) | 3.04 ± 0.79 | 3 (2-5) | 3.36 ± 0.57 | 3 (2-4) | 0.39 |
| | Week 8 | 2.4 ± 0.71 | 2 (2-5) | 2.68 ± 1.07 | 2 (2-5) | 3.2 ± 0.58 | 3 (2-4) | **0.0003** |
| **p-value (Baseline and Week 8) within group** | | **<0.0001** | | **0.0009** | | >0.9999 | | - |
| 9. Did you have a lot of energy? 1= all of the time, 2= most of the time, 3= a good bit of the time, 4= some of the time, 5= a little of the time, 6= none of the time | Pre study | 3.36 ± 0.49 | 3 (3-4) | 3.36 ± 0.76 | 3 (2-5) | 3.44 ± 0.65 | 3 (2-5) | 0.77 |
| | Week 4 | 3.28 ± 0.54 | 3 (2-4) | 3.04 ± 0.79 | 3 (2-5) | 3.36 ± 0.7 | 3 (2-5) | 0.40 |
| | Week 8 | 244 ± 0.71 | 2 (2-5) | 2.6 ± 1.08 | 2 (2-5) | 3.16 ± 0.69 | 3 (2-5) | **0.0006** |
| **p-value (Baseline and Week 8) within group** | | **<0.0001** | | **0.0003** | | 0.54 | | - |
| 10. Have you felt downhearted and blue? 1= all of the time, 2= most of the time, 3= a good bit of the time, 4= some of the time, 5= a little of the time, 6= none of the time | Pre study | 3.72 ± 0.54 | 4 (2-4) | 3.6 ± 0.82 | 4 (2-5) | 3.8 ± 0.5 | 4 (3-5) | 0.84 |
| | Week 4 | 3.92 ± 0.7 | 4 (2-5) | 3.92 ± 0.86 | 4 (2-5) | 3.84 ± 0.55 | 4 (3-5) | 0.89 |
| | Week 8 | 4.6 ± 0.71 | 5 (2-5) | 4.24 ± 1.17 | 5 (2-5) | 4 ± 0.71 | 4 (3-5) | **0.03** |
| **p-value (Baseline and Week 8) within group** | | **<0.0001** | | **0.003** | | 0.87 | | - |
| 11. During the past 4 weeks, how much of the time has your physical health or emotional problems interfered with your social activities (like visiting with friends, relative, etc.)? 1= all of the time, 2= most of the time, 3= a good bit of the time, 4= some of the time, 5= a little of the time, 6= none of the time | Pre study | 3.72 ± 0.46 | 4 (3-4) | 3.52 ± 0.77 | 4 (2-5) | 3.72 ± 0.46 | 4 (3-4) | 0.75 |
| | Week 4 | 3.84 ± 0.55 | 4 (2-5) | 3.88 ± 0.73 | 4 (2-5) | 3.8 ± 0.58 | 4 (3-5) | 0.82 |
| | Week 8 | 4.72 ± 0.68 | 5 (2-5) | 4.52 ± 1.01 | 5 (2-5) | 3.88 ± 0.67 | 4 (3-5) | **<0.0001** |
| **p-value (Baseline and Week 8) within group** | | **<0.0001** | | **<0.0001** | | >0.99 | | - |

| | | | | | | | | |
|---|---|---|---|---|---|---|---|---|
| *These groups showed a statistically significant reduction in pain compared to the placebo group | | | | | | | | |

### Statistics tool used:

For comparisons among groups, the non-parametric ANOVA (Kruskal-Wallis test) followed by Dunn's multiple comparisons test was used, and within-group comparisons across all time points (Baseline to post-study) were performed using the Friedman test with Dunn's multiple comparisons test.

### Interpretation:

### In general, would you say your health is:

Within-group analysis showed a statistically significant improvement in FIBER ENTRAPPED(p=<0.0001) and Comparator (p=0.002) groups at week 8 but not in placebo group
Among-group comparison demonstrated a statistically significant improvement in the FIBER ENTRAPPED (p=0.01) and comparator (p=0.02) groups compared to placebo at week 8.

### A. Does Your health Now limit you in these activities? If so, how much?

### 1. Moderate activities, such as moving a table, pushing a vacuum cleaner, bowling, or playing golf:

Within the group and among the group analysis showed a no statistically significant changes across all groups

### 2. Climbing several flights of stairs:

Within the group and among the group analysis showed a no statistically significant differences across all groups

### B. During the past 4 weeks have you had any of the following problems with your work or other regular activities as a result of your physical health?

### 3. Accomplished less than you would like & Were limited in the kind of work or other activities:

Within the group and among the group analysis showed a no statistically significant differences across all time points and groups

### C. During the past 4 weeks, were you limited in the kind of work you do or other regular activities as a result of any emotional problems (such as feeling depressed or anxious)?

### 4. Accomplished less than you would like:

Within the group and among the group analysis showed a no statistically significant differences across all time points and groups

### 5. Didn't do work or other activities as carefully as usual

Within the group analysis showed a statistical significant improvement in FIBER ENTRAPPED group at week 8. This was not observed in comparator and placebo groups.

Among the group analysis showed a no statistically significant differences across all groups

### 6. During the past 4 weeks, how much did pain interfere with your normal work (including both work outside the home and housework)?

Within-group analysis showed a statistically significant reduction in pain in FIBER ENTRAPPED(p=0.0009) and Comparator (p=0.001) groups at week 8 but not in placebo group
Among-group comparison demonstrated a significant in the FIBER ENTRAPPED (p=0.001) and comparator (p=0.01) groups at week 8, compared to placebo.

### D. The next three questions are about how you feel and how things have been during the past 4 weeks. For each question, please give the one answer that comes closest to the way you have been feeling. How much of the time during the past 4 weeks-

### 7. Have you felt calm and peaceful?

Within-group analysis showed a statistically significant improvement in FIBER ENTRAPPED (p=<0.0001) and Comparator (p=0.0009) groups at week 8 but not in placebo group
Among-group comparison demonstrated a significant in the FIBER ENTRAPPED (p=0.0004) and comparator (p=0.008) groups at week 8, compared to placebo

### 8. Did you have a lot of energy?

Within-group analysis showed a statistically significant improvement in energy in FIBER ENTRAPPED(p=<0.0001) and Comparator (p=0.0003) groups at week 8. Among-group comparison demonstrated a significant in the FIBER ENTRAPPED (p=0.003) and comparator (p=0.004) groups at week 8, compared to placebo.

### 9. Have you felt downhearted and blue?

Within-group analysis showed a statistically significant reduction in FIBER ENTRAPPED (p=<0.0001) and Comparator (p=0.003) groups at week 8 but not in placebo group
Among-group comparison demonstrated a significant reduction in FIBER ENTRAPPED (p=0.02) group compared to placebo, at week 8. This was not observed inNComparator groups.

### 10. During the past 4 weeks, how much of the time has your physical health or emotional problems interfered with your social activities (like visiting with friends, relative, etc.)?

Within-group analysis showed a statistically significant improvement in FIBER ENTRAPPED(p=<0.0001) and Comparator (p=<0.0001) groups at week 8 but not in placebo group
Among-group comparison demonstrated a significant in the FIBER ENTRAPPED (p=<0.0001) and comparator (p=0.0006) groups compared to placebo group at week 8.

### Overall interpretation:

The FIBER ENTRAPPED group demonstrated significant reductions in pain. These results indicate that the interventions FIBER ENTRAPPED were effective in enhancing overall health perception, emotional well-being, energy, and social functioning, with consistent superiority over placebo at study completion.

### 6. Overall global status of improvement

**Table 08: Overall global status of improvement**

| **Study group** | **Improved** | **Not improved** | **Total** |
|---|---|---|---|
| **FIBER ENTRAPPED n (%)** | 24 (96%) | 1 (4%) | 25 (100%) |
| **Comparator n (%)** | 21 (84%) | 4 (16%) | 25 (100%) |
| **Placebo n (%)** | 3 (12%) | 22 (88%) | 25 (100%) |

At study completion, the overall global status of improvement showed that 24 participants (96%) in the FIBER ENTRAPPED group experienced improvement, while 1 (4%) participants, did not. In the Comparator group, 21 participants (84%) reported improvement and 4 (16%) did not, whereas in the Placebo group, only 3 participants (12%) reported improvement and 22 (88%) showed no improvement. Notably, with a higher dose of Comparator, its efficacy appears comparable to FIBER ENTRAPPED formulations.

**Table 09: Concomitant Medications**

| **Concomitant Medication** | | **FIBER ENTRAPPED** | **Comparator** | **Placebo** |
|---|---|---|---|---|
| Aceclofenac 100mg + Paracetamol 350mg | No of participants | 9 | 15 | 14 |
| | Mean± SD | 9.56 ± 5 | 6.87 ± 2.17 | 14.79 ± 7.02 |
| Paracetamol 650mg | No of participants | 12 | 6 | 4 |
| | Mean± SD | 9.83 ± 3.66 | 9.5 ± 3.39 | 9.25 ± 1.5 |

Concomitant or Rescue medication use was highest in the placebo group, while FIBER ENTRAPPED group showed greater reliance on Paracetamol 650 mg.

The statistical analyses confirmed that there were no significant demographic differences including gender, age, BMI at baseline among the study groups, ensuring comparability. The test groups in this study received a daily dose of 200 mg FIBER ENTRAPPED formulation, while the comparator group received a higher dose of 1000 mg/day. Despite the lower dosage, both FIBER ENTRAPPED (Sustained Release) formulations demonstrated significant intra-group improvements across multiple efficacy endpoints.

Curcumin, the active compound in turmeric, has garnered attention for its potential therapeutic effects in osteoarthritis (OA), a prevalent degenerative joint disease. Recent clinical trials have evaluated its efficacy in comparison to placebo and standard treatments.

### Pain Reduction:

Sustained-release (FIBER ENTRAPPED) curcumin formulations demonstrated significant reductions in Visual Analog Scale (VAS) scores from week 4 onwards, sustained throughout the study period. The FIBER ENTRAPPED formulation exhibited reduction in pain at week 8. These findings align with previous studies indicating curcumin's efficacy in reducing OA pain, with some suggesting its effectiveness comparable to nonsteroidal anti-inflammatory drugs (NSAIDs) like diclofenac. [9]

### Inflammatory Biomarkers:

Both curcumin formulation (FIBER ENTRAPPED) showed significant reductions in erythrocyte sedimentation rate (ESR) levels, indicating decreased systemic inflammation. C-reactive protein (CRP) levels showed mild reductions in both the groups, with no statistical significance. Previous studies have reported significant reductions in CRP and ESR levels with curcumin supplementation, suggesting its potential to modulate inflammatory responses in OA Subjects. [Hsueh, Y.-S., et al. (2025). Effects of curcumin on serum inflammatory biomarkers in patients with knee osteoarthritis: a systematic review and meta-analysis of randomized controlled trials. BMC Complementary Medicine and Therapies, 25, 237. https://bmccomplementmedtherapies.biomedcentral.com/articles/10.1186/s12906-025-04951-6 ; Panahi, Y., et al. (2021). Effects of curcumin supplementation on inflammatory biomarkers in patients with rheumatoid arthritis and ulcerative colitis. Inflammation, 44(3), 1051-1060. https://www.sciencedirect.com/science/article/pii/S096522992100114X)

### WOMAC & OMERACT- OARSI:

Both OMERACT-OARSI and WOMAC assessments indicated that curcumin treatment, in sustained-release (FIBER ENTRAPPED) formulations, significantly improved pain, stiffness, and physical function compared to placebo. The FIBER ENTRAPPED formulation showed more pronounced improvements at Week 8. Both formulations consistently reduced pain during activities such as walking, standing, and squatting, and enhanced overall quality of life and emotional well-being. Overall, these findings support the efficacy of curcumin in alleviating osteoarthritis symptoms and improving patient-reported outcomes across multiple domains. These findings are consistent with previous studies demonstrating the anti-inflammatory and analgesic effects of curcumin in Subjects with osteoarthritis, supporting its role as an effective adjunct therapy for symptomatic relief. [Bellamy N, Buchanan WW, Goldsmith CH, Campbell J, Stitt LW. Validation study of WOMAC: a health status instrument for measuring clinically important patient relevant outcomes to antirheumatic drug therapy in patients with osteoarthritis of the hip or knee. J Rheumatol. 1988;15(11):1833-40; Tugwell P, Boers M, Brooks P, et al. OMERACT: an international initiative to improve outcome measurement in rheumatology. Trials. 2007;8:38.)]

### CONCLUSION

Fiber Entrapped Curcuminoids at a very low dose of 200mg (equivalent to 40mg curcuminoids per capsule or 80mg curcuminoids per day) demonstrates superior anti-inflammatory effects in osteoarthritic subjects compared to two 500mg capsules, twice daily of Comparator product (equivalent to 475mg curcuminoids per capsule or 1900mg of curcuminoids per day. Due to the Fiber Entrapment technology_as per the instant invention, curcuminoids can now be used at 23 times lower dose of curcuminoids to provide superior anti-inflammatory and analgesic effects in subjects with osteo-arthritis.

### Example A: Citrus entrapment combination of Water-soluble bio-activ

Combination of dietary Fibers for entrapment of Water-soluble bio-active is prepared as under:
i) Commercially available fiber concentrate (mixture of soluble and insoluble fibers from orange fruit) is dissolved in an aqueous medium and then centrifuged. The mother liquor, mainly consisting of soluble fiber is used as a soluble fiber in subsequent experiments in appropriate quantities to achieve desired ratio. The cake or the insoluble residue from the centrifuge is dried in oven at 80° C for 15 hours and pulverized. This component is used as insoluble fiber in subsequent experiments in appropriate quantities to achieve desired ratio.
ii) soluble dietary fiber from orange and insoluble dietary fiber also from orange as obtained in step i) in a ratio of 1:5, 6% stearic acid binder are taken, the same are mixed in water;
iii) the mixture is left for 24 hours for gel formation.

This combination may be subsequently used for entrapping bioactives

### Example A1: Caffeine as Water-soluble bioactive material entrapped in Citrus entrapment combination

The composition of entrapped caffeine in dietary fiber combination is prepared as under:
i) soluble dietary fiber from orange and insoluble dietary fiber also from orange in a ratio of 1:5, stearic acid (binder) 6% are taken, the same are mixed in water;
ii) the mixture is left for 24 hours for gel formation, subsequently the bio-active material namely caffeine is added to the gel and mixed for 15 hours at 80°C;
iii) the gel entrapped caffeine is then exposed to drying, preferably vacuum drying and dried for 36 hours at 60°C;
iv) the dried gel product is subjected to milling to reduce the particle size to 400 micron and passed through 40 mesh sieve.

The composition is then subjected to dissolution study.

Dissolution study on combination of Citrus fiber and stearic acid binder which entrapped caffeine is performed using USP Dissolution apparatus. The dissolution is carried out at pH 1.2 (to simulate gastric pH) during first two hours followed by in pH 6.8 buffer (to simulate intestinal pH) from hour 3 till hour 10. The temperature of 37°C is maintained throughout 10 hours of dissolution study.

4 samples are drawn at frequent time intervals and filtered. The filtrate is tested for the content of Caffeine by HPLC method and the mean calculated.

The result is provided in the following Table A1

**Table A1: Dissolution profile of composition of Citrus (orange) and stearic acid (binder) which entrapped caffeine**

| **Citrus Entrapped Caffeine Release Profile** | | | | | | | |
|---|---|---|---|---|---|---|---|
| **Time (Hrs.)** | **Beaker 1, Active (Product) mg** | **Beaker 2, Active (Product) mg** | **Beaker 3, Active (Product) mg** | **Beaker 4, Active (Product) mg** | **Mean, mg** | **Deviation, mg** | **Bio-Active Release, %** |
| 0.00 | 0.00 | 0.00 | 0.00 | 0.00 | 0.00 | 0.00 | 0.00 |
| 0.50 | 0.25 | 0.30 | 0.23 | 0.28 | 0.26 | 0.03 | 0.13 |
| 1.00 | 3.01 | 4.06 | 3.25 | 5.00 | 3.83 | 0.90 | 1.91 |
| 1 hr 30 mins | 7.88 | 8.17 | 7.53 | 7.79 | 7.84 | 0.27 | 3.92 |
| 1 hr 55 mins | 13.66 | 15.84 | 12.67 | 16.75 | 14.73 | 1.89 | 7.36 |
| 2 hr 5 mins | 18.51 | 18.34 | 19.07 | 18.07 | 18.50 | 0.42 | 9.25 |
| 2 hr 30 mins | 20.13 | 21.49 | 22.28 | 20.53 | 21.11 | 0.97 | 10.55 |
| 3.00 | 30.06 | 32.00 | 30.14 | 32.01 | 31.05 | 1.10 | 15.53 |
| 4.00 | 77.65 | 74.48 | 79.40 | 74.73 | 76.57 | 2.38 | 38.28 |
| 5.00 | 131.56 | 130.00 | 134.44 | 127.74 | 130.93 | 2.81 | 65.47 |
| 6.00 | 151.02 | 152.10 | 151.00 | 153.00 | 151.78 | 0.96 | 75.89 |
| 7.00 | 169.49 | 170.48 | 164.10 | 171.73 | 168.95 | 3.36 | 84.48 |
| 8.00 | 180.00 | 189.38 | 181.38 | 189.44 | 185.05 | 5.06 | 92.53 |
| 9.00 | 189.43 | 191.76 | 190.03 | 192.09 | 190.83 | 1.30 | 95.41 |
| 10.00 | 192.66 | 192.01 | 193.54 | 193.10 | 192.83 | 0.65 | 96.41 |

To compare the dissolution caffeine was provided in un-entrapped manner and its dissolution tested. The un-entrapped Caffeine is a regular caffeine starting material that is used for entrapment.

Samples are drawn at frequent time intervals and filtered. The filtrate is tested for the content of Caffeine by HPLC method and the mean calculated.

The results are provided in Table A2

**Table A2: Dissolution Profile of un-entrapped caffeine**

| **Un-entrapped Caffeine Release Profile** | | | | | | | |
|---|---|---|---|---|---|---|---|
| **Time (Hrs.)** | **Beaker 1, Active (Product) mg** | **Beaker 2, Active (Product) mg** | **Beaker 3, Active (Product) mg** | **Beaker 4, Active (Product) mg** | **Mean, mg** | **Deviation, mg** | **Bio-Active Release, %** |
| 0.00 | 0.00 | 0.00 | 0.00 | 0.00 | 0.00 | 0.00 | 0.00 |
| 30 mins | 20.14 | 19.64 | 21.69 | 20.54 | 20.50 | 0.87 | 10.25 |
| 1.00 | 140.54 | 138.02 | 140.00 | 136.07 | 138.66 | 2.04 | 69.33 |
| 1 hr 30 mins | 173.52 | 170.97 | 175.34 | 173.00 | 173.21 | 1.80 | 86.60 |
| 1 hr 55 mins | 181.66 | 183.42 | 185.26 | 180.63 | 182.74 | 2.04 | 91.37 |
| 2 hr 5 mins | 187.23 | 189.70 | 189.22 | 187.50 | 188.41 | 1.23 | 94.21 |
| 2 hr 30 mins | 191.38 | 192.36 | 194.60 | 189.63 | 191.99 | 2.07 | 96.00 |
| 3.00 | 196.54 | 198.43 | 197.48 | 192.58 | 196.26 | 2.57 | 98.13 |
| 4.00 | 196.72 | 198.61 | 197.90 | 198.47 | 197.93 | 0.86 | 98.96 |
| 5.00 | 198.64 | 199.06 | 198.80 | 197.02 | 198.38 | 0.92 | 99.19 |
| 6.00 | 198.34 | 198.80 | 197.64 | 198.69 | 198.37 | 0.52 | 99.19 |
| 7.00 | 198.23 | 199.88 | 198.06 | 198.42 | 198.65 | 0.83 | 99.32 |
| 8.00 | 198.90 | 199.03 | 198.69 | 199.29 | 198.98 | 0.25 | 99.49 |
| 9.00 | 197.88 | 197.90 | 197.82 | 198.90 | 198.12 | 0.52 | 99.06 |
| 10.00 | 198.04 | 199.84 | 198.27 | 199.20 | 198.84 | 0.84 | 99.42 |

The Comparison of Dissolution Profile of Citrus Entrapped Caffeine with Unentrapped Caffeine is provided in the Figure 2.

It is evident from above and the said figure that the dietary Fiber combination entrapped caffeine has slow release over 10 hours time releasing 100% of active while the un-entrapped caffeine is released 100% within 2 hours. This clearly goes to show that the entrapment of dietary Fiber is able to protect the Water-soluble bio-active caffeine over a period of time and release it slowly.

### Example A2: Role of different binders in the entrapment composition for caffeine release.

3 different compositions comprising combination of Citrus dietary Fibers namely orange and binder with caffeine entrapped therein, are prepared according to Example A1 but with 3 different binders namely Acacia gum, Xanthan gum and stearic acid

Dissolution study on Citrus entrapped caffeine in the 3 different combinations are performed using USP Dissolution apparatus as in Example A1. The dissolution was carried out at pH 1.2 during first two hours followed by in pH 6.8 buffer from hour 3 till hour 10. The temperature of 37°C was maintained throughout 10 hours of dissolution study. The samples were drawn at frequent time intervals and filtered. The filtrate was tested for the content of Caffeine by HPLC method.

The result is provided in the following Table A3

**Table A3: Dissolution Profile of caffeine entrapped in combination of Citrus dietary fiber and binders namely Acacia gum, Xanthan gum and stearic acid**

| **Different Binders Entrapped Caffeine Release** | | | |
|---|---|---|---|
| **Time (Hrs.)** | **Acacia Gum, Active %** | **Xanthum Gum, Active %** | **Stearic acid, Active %** |
| 0.00 | 0.00 | 0.00 | 0.00 |
| 30 mins | 4.20 | 5.08 | 0.13 |
| 1.00 | 7.43 | 8.14 | 1.91 |
| 1 hr 30 mins | 10.94 | 13.14 | 3.92 |
| 1 hr 55 mins | 10.95 | 14.59 | 7.36 |
| 2 hr 5 mins | 22.53 | 24.16 | 9.25 |
| 2 hr 30 mins | 35.93 | 48.08 | 10.55 |
| 3.00 | 38.40 | 54.14 | 15.53 |
| 4.00 | 52.29 | 72.32 | 38.28 |
| 5.00 | 55.94 | 87.63 | 65.47 |
| 6.00 | 93.75 | 95.51 | 75.89 |
| 7.00 | 95.75 | 98.06 | 84.48 |
| 8.00 | 95.50 | 98.10 | 92.53 |
| 9.00 | 96.92 | 98.14 | 95.41 |
| 10.00 | 98.77 | 98.11 | 96.41 |

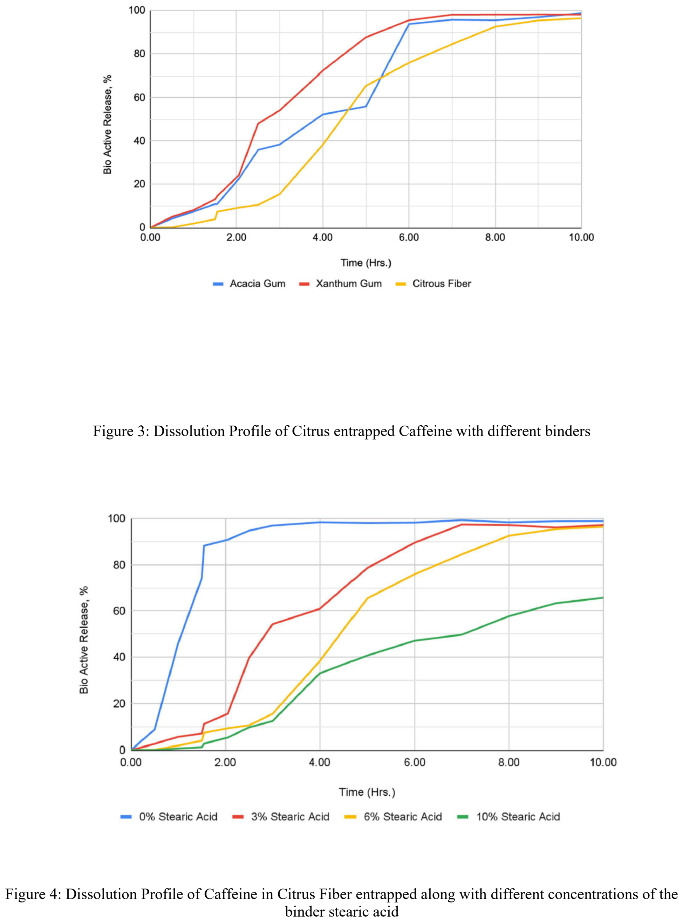

The Dissolution Profile of Citrus entrapped Caffeine with different binders namely Acacia gum, xanthan gum and stearic acid is provided in the Figure 3.

This dissolution data in figure 3 and above clearly shows that with Gum Acacia >50% release happens in just 4 hrs and >90% release takes place within 6 hrs. This release profile is not adequate to provide maximum health benefit. In case of Xanthan gum, >50% release happens within 3 hrs and >90% in 6 hrs. This is also not a desirable release profile for sustained action of caffeine. With stearic acid binder, the release is gradual and uniform, extending up to 10 hrs, which can be considered as most desirable release profile for caffeine bioactivity.

This goes to show criticality of the binder used in the entrapment combination. Though acacia gum and xanthan gum are binders but they do not provide the required dissolution as stearic acid.

### Example A3: Role of different concentration of stearic acid as binders in the entrapment composition for caffeine release.

4 different compositions comprising combination of Citrus dietary Fibers and binder with caffeine entrapped therein, are prepared according to Example A1 but with 4 different concentrations of stearic acid as binder.

Dissolution study on Citrus entrapped caffeine in the 4 different compositions were performed using USP Dissolution apparatus as in Example A1. The dissolution was carried out at pH 1.2 during first two hours followed by in pH 6.8 buffer from hour 3 till hour 10. The temperature of 37°C was maintained throughout 10 hours of dissolution study. The samples were drawn at frequent time intervals and filtered. The filtrate was tested for the content of Caffeine by HPLC method.

The result is provided in the following Table A4

**Table A4: Dissolution Profile of caffeine entrapped in combination of Citrus dietary fiber and different concentration of stearic acid as binder**

| **Citrus Entrapped Caffeine Release with Various Stearic Acid %** | | | | |
|---|---|---|---|---|
| **Time (Hrs.)** | **0% Stearic Acid, Active (Product) mg** | **3% Stearic Acid, Active (Product) mg** | **6% Stearic Acid, Active (Product) mg** | **10% Stearic Acid, Active (Product) mg** |
| 0.00 | 0.00 | 0.00 | 0.00 | 0.00 |
| 30 mins | 17.47 | 5.28 | 0.26 | 0.02 |
| 1.00 | 92.01 | 11.20 | 3.83 | 1.37 |
| 1 hr 30 mins | 148.37 | 14.06 | 7.84 | 2.48 |
| 1 hr 55 mins | 176.43 | 22.33 | 14.73 | 5.39 |
| 2 hr 5 mins | 181.59 | 31.19 | 18.50 | 10.59 |
| 2 hr 30 mins | 189.43 | 79.18 | 21.11 | 19.28 |
| 3.00 | 193.85 | 108.53 | 31.05 | 24.83 |
| 4.00 | 196.74 | 121.86 | 76.57 | 66.00 |
| 5.00 | 196.05 | 157.21 | 130.93 | 81.49 |
| 6.00 | 196.39 | 179.06 | 151.78 | 94.29 |
| 7.00 | 198.60 | 194.74 | 168.95 | 99.49 |
| 8.00 | 196.64 | 194.28 | 185.05 | 115.50 |
| 9.00 | 197.58 | 192.18 | 190.83 | 126.73 |
| 10.00 | 197.75 | 194.36 | 192.83 | 131.39 |

The Comparison of Dissolution Profile of Caffeine entrapped in Citrus fiber (orange) along with different concentrations of the binder stearic acid is provided in Figure 4.

It is found that in the combination with 0%stearic acid as binder there is immediate release of caffeine and within 4 hours almost 100% release occurs.

With 3% stearic acid binder 60% release of caffeine occurs at 4 hours, 90% at 6 hours and >95% is released around 10 hours.

With 10% stearic acid binder, >30% caffeine is released at 4 hours, >45% released at 6 hours, 65% release at the end of 10 hrs. This is considered as incomplete release.

With 6% stearic acid, 40% caffeine is released at 4hours, 65% released at 6 hours and >95% release at 10hours

A minimum of 80% release at the end of 10 hours is considered to be ideal. Thus 6% stearic acid binder is the ideal amount of binder used in the combination with dietary actives for entrapment and appropriate release of the active, though with 3% also slow release is achieved although not to such extent.

Accordingly, it is evident that the amount of the binder like stearic acid used is critical for the slow release of the bio-active from the entrapment composition.

### Example A4

### Composition comprising combination of Citrus Fiber (orange) and binder (stearic acid) entrapping bio-active was prepared as Example A1 except that the bio-active material is Ascorbic Acid.

Dissolution study on Citrus (orange) entrapped caffeine was performed using USP Dissolution apparatus. The dissolution was carried out at pH 1.2 during first two hours followed by in pH 6.8 buffer from hour 3 till hour 10. The temperature of 37°C was maintained throughout 10 hours of dissolution study.

4 samples were drawn at frequent time intervals and filtered. The filtrate was tested for the content of Ascorbic acid by HPLC method and the mean calculated.

The result is provided in the following Table A5

**Table A5: Dissolution studies of Citrus Fiber entrapped Ascorbic acid**

| **Citrus Entrapped Ascorbic Acid Release** | | | | | | | |
|---|---|---|---|---|---|---|---|
| **Time (Hrs.)** | **Beaker 1, Active (Product) mg** | **Beaker 2, Active (Product) mg** | **Beaker 3, Active (Product) mg** | **Beaker 4, Active (Product) mg** | **Mean, mg** | **Deviation, mg** | **Bio-Active Release, %** |
| 0.00 | 0.00 | 0.00 | 0.00 | 0.00 | 0.00 | 0.00 | 0.00 |
| 0.50 | 0.10 | 0.19 | 0.01 | 0.01 | 0.08 | 0.09 | 0.08 |
| 1.00 | 0.79 | 0.98 | 0.62 | 0.28 | 0.67 | 0.30 | 0.67 |
| 1 hr 30 mins | 5.03 | 6.84 | 5.99 | 6.84 | 6.17 | 0.86 | 6.17 |
| 1 hr 55 mins | 12.85 | 10.83 | 11.92 | 11.83 | 11.86 | 0.83 | 11.86 |
| 2 hr 5 mins | 21.38 | 20.52 | 20.00 | 19.60 | 20.38 | 0.77 | 20.38 |
| 2 hr 30 mins | 30.82 | 29.54 | 29.28 | 31.94 | 30.40 | 1.23 | 30.40 |
| 3.00 | 40.74 | 41.04 | 41.00 | 42.94 | 41.43 | 1.01 | 41.43 |
| 4.00 | 50.93 | 50.00 | 49.04 | 51.82 | 50.45 | 1.20 | 50.45 |
| 5.00 | 65.92 | 66.82 | 66.30 | 66.04 | 66.27 | 0.40 | 66.27 |
| 6.00 | 75.03 | 74.14 | 74.10 | 72.81 | 74.02 | 0.91 | 74.02 |
| 7.00 | 81.39 | 80.01 | 80.23 | 79.24 | 80.22 | 0.89 | 80.22 |
| 8.00 | 86.90 | 87.83 | 86.39 | 85.03 | 86.54 | 1.17 | 86.54 |
| 9.00 | 94.82 | 96.07 | 92.07 | 90.77 | 93.43 | 2.44 | 93.43 |
| 10.00 | 99.90 | 100.21 | 98.20 | 97.28 | 98.90 | 1.39 | 98.90 |

To compare the dissolution Ascorbic acid is provided in un-entrapped manner and its dissolution tested. Unentrapped Ascorbic acid is same as regular Ascorbic acid raw material before entrapment

4 samples are drawn at frequent time intervals and filtered. The filtrate is tested for the content of Ascorbic acid by HPLC method and the mean calculated.

The results are provided in Table A6

**Table A6: Dissolution Profile of un-entrapped Ascorbic acid**

| **Pure Ascorbic Acid Release** | | | | | | | |
|---|---|---|---|---|---|---|---|
| **Time (Hrs.)** | **Beaker 1, Active (Product) mg** | **Beaker 2, Active (Product) mg** | **Beaker 3, Active (Product) mg** | **Beaker 4, Active (Product) mg** | **Mean, mg** | **Deviation, mg** | **Bio-Active Release, %** |
| 0.00 | 0.00 | 0.00 | 0.00 | 0.00 | 0.0 | 0.00 | 0.00 |
| 0.50 | 3.43 | 2.94 | 3.83 | 2.83 | 3.26 | 0.46 | 3.26 |
| 1.00 | 31.74 | 30.93 | 31.59 | 30.63 | 31.22 | 0.53 | 31.22 |
| 1 hr 30 mins | 52.99 | 54.83 | 54.94 | 53.12 | 53.97 | 1.06 | 53.97 |
| 1 hr 55 mins | 84.69 | 79.74 | 83.74 | 82.03 | 82.55 | 2.17 | 82.55 |
| 2 hr 5 mins | 92.49 | 92.47 | 94.20 | 94.72 | 93.47 | 1.16 | 93.47 |
| 2 hr 30 mins | 99.71 | 100.20 | 100.74 | 99.43 | 100.02 | 0.58 | 100.02 |
| 3.00 | 101.38 | 100.48 | 100.63 | 101.64 | 101.03 | 0.56 | 101.03 |
| 4.00 | 100.37 | 101.83 | 100.93 | 100.83 | 100.99 | 0.61 | 100.99 |
| 5.00 | 100.92 | 101.07 | 100.73 | 101.54 | 101.06 | 0.35 | 101.06 |
| 6.00 | 99.80 | 100.49 | 101.11 | 100.84 | 100.56 | 0.56 | 100.56 |
| 7.00 | 101.40 | 101.49 | 100.63 | 101.58 | 101.27 | 0.44 | 101.27 |
| 8.00 | 100.40 | 100.42 | 100.52 | 100.04 | 100.34 | 0.21 | 100.34 |
| 9.00 | 101.03 | 101.38 | 99.99 | 101.62 | 101.01 | 0.72 | 101.01 |
| 10.00 | 101.70 | 100.90 | 100.30 | 100.94 | 100.96 | 0.58 | 100.96 |

The Comparison of Dissolution Profile of Citrus Entrapped Ascorbic Acid with Unentrapped Ascorbic Acid is provided in Figure A4.

It is found that the dissolution of the Ascorbic acid from Citrus entrapped composition is slow and in 10hours about 100% release is achieved. On the contrary the composition without the entrapment has ascorbic acid released immediately with 100% release occurring in 2.5 hours.

This clearly goes to show that the entrapment of dietary Fiber is able to protect the Water-soluble bio-active ascorbic acid over a period of time and release it slowly.

### Example A6: Role of different binders in the entrapment composition for ascorbic acid release.

3 different compositions comprising combination of Citrus dietary Fibers (orange) and binder with ascorbic entrapped therein, are prepared according to Example A1 but with 3 different binders namely Acacia gum, xanthan gum and stearic acid.

Dissolution study on Citrus entrapped ascorbic acid in the 3 different compositions are performed using USP Dissolution apparatus as in Example A1. The dissolution is carried out at pH 1.2 during first two hours followed by in pH 6.8 buffer from hour 3 till hour 10. The temperature of 37°C was maintained throughout 10 hours of dissolution study. The samples are drawn at frequent time intervals and filtered. The filtrate is tested for the content of ascorbic acid by HPLC method.

The result is provided in the following Table A7

**Table A7: Dissolution Profile of ascorbic acid entrapped in combination of Citrus dietary fiber and different binders namely Acacia gum, xanthan gum and stearic acid**

| **Different Binders Entraped Ascorbic Acid Release** | | | |
|---|---|---|---|
| **Time (Hrs.)** | **Acacia Gum, Active (Product) mg** | **Xanthum Gum, Active (Product) mg** | **Stearic Acid, Active (Product) mg** |
| 0.00 | 0.00 | 0.00 | 0.00 |
| 0.50 | 7.62 | 8.93 | 0.08 |
| 1.00 | 12.62 | 15.73 | 0.67 |
| 1 hr 30 mins | 20.53 | 23.43 | 6.17 |
| 1 hr 55 mins | 28.61 | 31.21 | 11.86 |
| 2 hr 5 mins | 51.40 | 49.10 | 20.38 |
| 2 hr 30 mins | 69.66 | 72.83 | 30.40 |
| 3.00 | 80.10 | 81.83 | 41.43 |
| 4.00 | 89.48 | 90.38 | 50.45 |
| 5.00 | 97.20 | 98.42 | 66.27 |
| 6.00 | 100.53 | 102.03 | 74.02 |
| 7.00 | 100.39 | 100.63 | 80.22 |
| 8.00 | 102.10 | 101.49 | 86.54 |
| 9.00 | 100.52 | 100.53 | 93.43 |
| 10.00 | 100.22 | 99.90 | 98.90 |

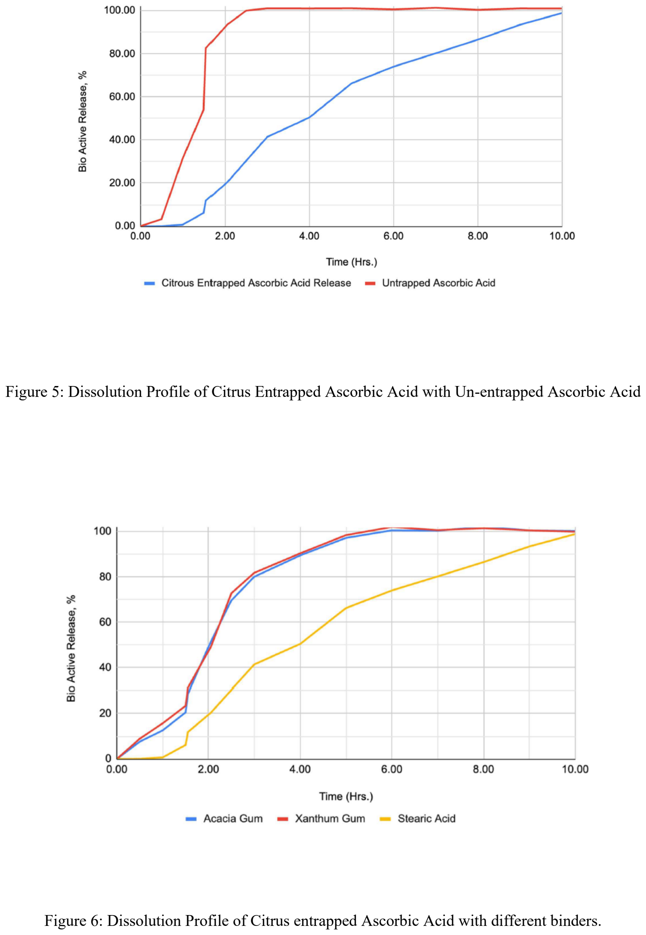

Dissolution Profile of Citrus entrapped Ascorbic Acid with different binders is shown in Figure 6.

This clearly shows that with Gum Acacia >50% release happens in just 2.5hrs and nearly 90% release in 4 hrs. This kind of release cannot be considered as ideal sustained release for Ascorbic acid health benefits. Similarly, in case of Xanthan gum more than 90% release takes place within 4 hrs. Not suitable for sustained effects of Ascorbic acid. However, in case of Stearic acid, just 50% release takes place in 4 hrs, and >90% release happens only after 9 hrs. This release profile can be considered as excellent for Ascorbic acid sustained health benefits.

This goes to show criticality of the binder used in the entrapment composition

### Example A7: Role of different concentration of stearic acid as binders in the entrapment composition for ascorbic acid release.

4 different compositions comprising combination of Citrus dietary Fibers (orange) and binder with ascorbic acid entrapped therein, are prepared according to Example A1 but with ascorbic acid as bioactive and 4 different concentrations of stearic acid as binder.

Dissolution study on Citrus entrapped ascorbic acid in the 4 different compositions are performed using USP Dissolution apparatus as in Example A1. The dissolution is carried out at pH 1.2 (to simulate gastric pH) during first two hours followed by in pH 6.8 buffer (to simulate intestinal pH) from hour 3 till hour 10. The temperature of 37°C is maintained throughout 10 hours of dissolution study. The samples are drawn at frequent time intervals and filtered. The filtrate was tested for the content of ascorbic acid by HPLC method.

The result is provided in the following Table A8

**Table A8: Dissolution Profile of ascorbic acid entrapped in combination of Citrus dietary fiber and different concentration of stearic acid as binder**

| **Citrus Entraped Ascorbic Release with Various Stearic Acid %** | | | | |
|---|---|---|---|---|
| **Time (Hrs.)** | **0% Stearic Acid, Active (Product) mg** | **3% Stearic Acid, Active (Product) mg** | **5% Stearic Acid, Active (Product) mg** | **10% Stearic Acid, Active (Product) mg** |
| 0.00 | 0.00 | 0.00 | 0.00 | 0.00 |
| 0.50 | 3.26 | 0.96 | 0.08 | 0.00 |
| 1.00 | 31.22 | 1.94 | 0.67 | 0.04 |
| 1 hr 30 mins | 53.97 | 13.85 | 6.17 | 0.74 |
| 1 hr 55 mins | 82.55 | 26.58 | 11.86 | 1.68 |
| 2 hr 5 mins | 93.47 | 42.49 | 20.38 | 16.84 |
| 2 hr 30 mins | 100.02 | 59.86 | 30.40 | 20.59 |
| 3.00 | 101.03 | 70.74 | 41.43 | 26.94 |
| 4.00 | 100.99 | 79.95 | 50.45 | 31.94 |
| 5.00 | 101.06 | 87.84 | 66.27 | 38.04 |
| 6.00 | 100.56 | 91.85 | 74.02 | 41.40 |
| 7.00 | 101.27 | 100.05 | 80.22 | 50.03 |
| 8.00 | 100.34 | 100.30 | 86.54 | 57.83 |
| 9.00 | 101.01 | 100.02 | 93.43 | 56.03 |
| 10.00 | 100.96 | 99.94 | 98.90 | 60.32 |

The Comparison of Dissolution Profile of Ascorbic Acid in Citrus Fiber entrapped along with different concentrations of the binder stearic acid is provided in Figure 6.

It is found that in the combination with 0%stearic acid as binder there is immediate release of ascorbic acid and within 2.5 hours 100% release occurs.

With 3% stearic acid slower release of ascorbic acid occurs with 100% release around 6.5 hours while with 5% stearic acid about 100% is released around 10 hours.

However, with10% stearic acid the release of ascorbic acid is very slow with about 60% release in 10 hours Just 60% release in 10 hrs is not not adequate for health benefits. A minimum of 80% is desirable.

Accordingly, it is evident that the amount of the binder like stearic acid used is critical for the slow release and complete release of the bio-active from the entrapment composition. At 5 % stearic acid best release of ascorbic acid bio active is found while 3% also gives result but not as good

### Example A8: Protection against stomach acid and enzymes;

Ascorbic acid equivalent to 100mg is suspended in 900ml of simulated gastric fluid (comprising of sodium chloride, Enzymes Pepsin and 0.1 N Hydrochloric acid) and stirred for 2 hours. 2.5ml aliquot is diluted to 100ml with 6.8 pH buffer and then analysed by HPLC for the content of Ascorbic acid. The results are shown in the Table 9.

In line with the above 100mg of ascorbic acid entrapped in citrus fibre and stearic acid binder as in Example 4 is prepared and is suspended in 900ml of simulated gastric fluid (comprising of sodium chloride, Enzymes Pepsin and 0.1 N Hydrochloric acid) and stirred for 2 hours. 2.5ml aliquot is diluted to 100ml with 6.8 pH buffer and then analysed by HPLC for the content of Ascorbic acid. The results are shown in the Table A9.

**Table A9: Protection of Ascorbic acid from degradation in gastric acid and enzymes.**

| | Un-entrapped Ascorbic acid | Citrus Fiber entrapped Ascorbic acid |
|---|---|---|
| Ascorbic acid content after treatment with Simulated Gastric fluid with enzymes | 72.45mg | 97.22mg |

Inference: Ascorbic acid was found to degrade substantially (~28%) in gastric acid with Pepsin enzyme in 2 hours. Whereas, Citrus entrapped ascorbic acid showed significant resistance to degradation and was degraded by a small fraction(2-3%).

This clearly demonstrates that the citrus entrapped water soluble active like Ascorbic acid is protected from the gastric acid and enzymes

### Example A9: Sustained release profile of Caffeine in different ratios of soluble and insoluble fibers.

Citrus fiber entrapped caffeine was prepared with different ratios of soluble and insoluble fibers from orange fruit.

The dissolution is carried out at pH 1.2 (to simulate gastric pH) during first two hours followed by in pH 6.8 buffer (to simulate intestinal pH) from hour 3 till hour 10. The temperature of 37°C is maintained throughout 10 hours of dissolution study. The results are shown in Table A10.

**Table A10: Dissolution profile of Caffeine entrapped in different ratios of soluble and insoluble citrus fiber.**

| **Entrapped Caffeine Release** | | | |
|---|---|---|---|
| **Time (Hrs.)** | **Fiber ratio Soluble to insoluble 8:1** | **Fiber ratio of Soluble to insoluble 1:10** | **Fiber ratio Soluble to insoluble 1:5** |
| 0.00 | 0.00 | 0.00 | 0.00 |
| 30 mins | 45.20 | 5.08 | 0.13 |
| 1.00 | 74.43 | 8.14 | 1.91 |
| 1 hr 30 mins | 90.94 | 13.14 | 3.92 |
| 1 hr 55 mins | 90.95 | 14.59 | 7.36 |
| 2 hr 5 mins | 92.53 | 14.86 | 9.25 |
| 2 hr 30 mins | 95.93 | 15.08 | 10.55 |
| 3.00 | 98.40 | 17.14 | 15.53 |
| 4.00 | | 18.32 | 38.28 |
| 5.00 | | 22.63 | 65.47 |
| 6.00 | | 24.51 | 75.89 |
| 7.00 | | 24.90 | 84.48 |
| 8.00 | | 25.10 | 92.53 |
| 9.00 | | 25.14 | 95.41 |
| 10.00 | | 26.11 | 96.41 |

Inference: With higher content of soluble fiber, the dissolution is very quick and 98.4% caffeine is released in just 3 hrs. With higher content of insoluble fiber the release to too slow. Only 26% of the Caffeine is released. The 1:5 ratio of Soluble and Insoluble fiber provided acceptable release profile.

## Claims

1. A combination of dietary fibres for entrapment of bio-active, comprising: soluble and insoluble dietary fibres in a ratio of 5:1 to 1:5; optional binder and water soluble or water insoluble bio-active entrapped therein.

2. The combination as claimed in claim 1 wherein the soluble and insoluble dietary fibre is selected from citrus fruits.

3. The combination as claimed in claim 2 wherein the soluble and insoluble dietary fibre is from citrus fruit is selected from orange, green tangerine, bergamot, lemon and lime.

4. The combination as claimed in claim 1 wherein the bio-active is selected from natural extract like Ashwagandha **(*Withania somnifera*)** extract, Gymnema extract, Berberine, Shatavari *(Asparagus racemosus)* extract, Marigold extract, Capsaicin, caffeine, ascorbic acid, curcuminoids like curcumin; nutraceuticals; nutrients; pharmaceutical actives; natural active pharmaceutical ingredient; drug; vaccine; antibodies; enzymes and prebiotic.

5. The combination as claimed in claim 4 wherein the bio-active is selected from curcumin, caffeine and ascorbic acid.

6. The combination as claimed in claim 1 wherein the binder is present in amount of 3-8%.

7. The combination as claimed in claim 6 wherein the binder is selected from stearic acid, palmitic acid and myristic acid.

8. A process for preparing the combination of dietary fiber for entrapment of the bio-active, as claimed in claim 1, comprising:
i) providing the soluble and insoluble dietary fibers in a ratio of 5:1 to 1:5, mixing the same in a solvent selected from water or combination of water and organic solvent;
ii) leaving the same for 2-24 hours for gel formation, subsequently adding the bio-active material to the gel and mixing for 2-15 hours at 20-80°C;
iii) exposing the gel entrapped bio-active to drying, preferably vacuum drying and dried for 2-36 hours at 20-80°C;
iv) subjecting the dried gel product to milling to reduce the particle size to 10-2000 micron and passed through 20-200 mesh sieve.

9. The process as claimed in claim 8 wherein the solvent is selected from water, ethanol, isopropyl alcohol, acetone, methanol.

10. A process for preparing the combination of dietary fiber and binder for entrapment of the bio-active, as claimed in claim 1, comprising:
i) providing the soluble and insoluble dietary fibers in a ratio of 5:1 to 1:5, a binder in the range of 5-6%, mixing the same in a solvent selected from water or combination of water and organic solvent;
ii) leaving the same for 2-24 hours for gel formation;
iii) subsequently adding the bioactive.

11. The process as claimed in claim 10 wherein the solvent is selected from water, ethanol, isopropyl alcohol, acetone, methanol.

12. An entrapment composition comprising combination of dietary fibres comprising: soluble and insoluble fibers in a ratio of 5:1 to 1:5; optional binder; entrapped water soluble or water insoluble bio-active therein; and excipients.

13. The composition as claimed in claim 12 wherein the soluble and insoluble dietary fibre is selected from citrus fruits.

14. The composition as claimed in claim 13 wherein the soluble and insoluble dietary fibre is selected from orange, green tangerine, bergamot, lemon and lime.

15. The composition as claimed in claim 12 wherein the bioactive is selected from natural extract like Ashwagandha (***Withania somnifera***) extract, Gymnema extract, Berberine, Shatavari (*Asparagus racemosus)* extract, Marigold extract, Capsaicin, caffeine, ascorbic acid, curcuminoids like curcumin; nutraceuticals; nutrients; pharmaceutical actives; natural active pharmaceutical ingredient; drug; vaccine; antibodies, enzymes and prebiotic.

16. The composition as claimed in claim 15 wherein the bio-active is selected from caffeine, ascorbic acid and curcumin.

17. The composition as claimed in claim 12 wherein the excipient is selected from suspending agent, thickening agent, emulsifying agent, plasticizer, diluent;, disintegrant, stabilizing agent, viscosity modifying agent, sweetening agent.

18. The composition as claimed in claim 12 wherein the binder is present in amount of 3-8%.

19. The composition as claimed in claim 12 wherein the binder is selected from stearic acid, palmitic acid and myristic acid.

20. A process for preparing the entrapment composition, as claimed in claim 12, comprising:
a) providing the soluble and insoluble dietary fibers in a ratio of 5:1 to 1:5, mixing the same in a solvent selected from water or combination of water and organic solvent;
b) leaving the same for 2-24 hours for gel formation, subsequently adding the bio-active material to the gel and mixing for 2-15 hours at 20-80°C;
c) exposing the gel entrapped bio-active to drying, preferably vacuum drying and dried for 2-36 hours at 20-80°C;
d) subjecting the dried gel product to milling to reduce the particle size to 10-2000 micron and passed through 20-200 mesh sieve;
c) mixing with excipient such as suspending agent, thickening agent, emulsifying agent, plasticizer, binder, diluent, disintegrant, stabilizing agent, viscosity modifying agent, sweetening agent, and the like.

21. A process for preparing the entrapment composition, as claimed in claim 12, comprising:
i) providing the soluble and insoluble dietary fibers in a ratio of 5:1 to 1:5, a binder in the range of 3% to 8%, mixing the same in a solvent selected from water or combination of water and organic solvent;
ii) leaving the same for 2-24 hours for gel formation, subsequently adding the bio-active material to the gel and mixing for 2-15 hours at 20-80°C;
iii) exposing the gel entrapped bio-active to drying, preferably vacuum drying and dried for 2-36 hours at 20-80°C;
iv) subjecting the dried gel product to milling to reduce the particle size to 10-2000 micron and passing through 20-200 mesh sieve;
v) subsequently adding bio-active.
